(19) **Europäisches Patentamt / European Patent Office / Office européen des brevets**

(11) **EP 3 660 544 B1**

(12) **EUROPEAN PATENT SPECIFICATION**

(45) Date of publication and mention
of the grant of the patent:
**22.05.2024 Bulletin 2024/21**

(21) Application number: **18839096.7**

(22) Date of filing: **25.07.2018**

(51) International Patent Classification (IPC):
**G01V 8/12** *(2006.01)*     **B65H 7/14** *(2006.01)*
**G07D 11/20** *(2019.01)*     *G01V 8/14* *(2006.01)*
*G01V 8/22* *(2006.01)*     *G01N 21/86* *(2006.01)*

(52) Cooperative Patent Classification (CPC):
**G07D 11/20; B65H 7/14; G01V 8/12;**
B65H 2553/412; B65H 2553/44; B65H 2701/1912;
G01N 21/86; G01V 8/14; G01V 8/22

(86) International application number:
**PCT/JP2018/027960**

(87) International publication number:
**WO 2019/022157 (31.01.2019 Gazette 2019/05)**

(54) **MEDIUM PASSAGE DETECTION DEVICE AND PAIR OF MEDIUM PASSAGE DETECTION DEVICES**

MEDIENDURCHGANGSDETEKTIONSVORRICHTUNG UND PAAR VON
MEDIENDURCHGANGSDETEKTIONSVORRICHTUNGEN

DISPOSITIF DE DÉTECTION DE PASSAGE DE SUPPORT ET PAIRE DE DISPOSITIFS DE
DÉTECTION DE PASSAGE DE SUPPORT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2017 JP 2017145713**

(43) Date of publication of application:
**03.06.2020 Bulletin 2020/23**

(73) Proprietor: **Glory Ltd.**
**Hyogo 670-8567 (JP)**

(72) Inventors:
• **MURAKAWA, Masatoshi**
**Himeji-shi**
**Hyogo 670-8567 (JP)**
• **SUGIHARA, Yoshihiro**
**Himeji-shi**
**Hyogo 670-8567 (JP)**

• **TANIGUCHI, Tetsuya**
**Himeji-shi**
**Hyogo 670-8567 (JP)**

(74) Representative: **SSM Sandmair
Patentanwälte Rechtsanwalt
Partnerschaft mbB
Joseph-Wild-Straße 20
81829 München (DE)**

(56) References cited:
EP-A2- 0 628 787     JP-A- H0 798 247
JP-A- H0 798 247     JP-A- S5 236 025
JP-A- H05 273 119     JP-A- H10 122 966
JP-A- 2002 267 767     JP-A- 2003 104 588
JP-A- 2005 083 850     JP-A- 2016 191 651
JP-A- 2017 146 289     US-A1- 2015 151 938

**Description**

TECHNICAL FIELD

The present invention relates to medium passage detection devices and pairs of medium passage detection devices. The present invention specifically relates to a medium passage detection device and a pair of medium passage detection devices suitable for optically detecting passage of a transparent medium, especially a medium such as a banknote including a transparent portion such as a clear window.

BACKGROUND ART

Medium passage detection devices are devices for detecting a medium under transport in a device such as a medium handling device, and usually used are transmissive optical sensors.

Examples of the medium to be transported include sheets such as banknotes (printed money), gift vouchers, and checks. Although paper usually used for sheets such as banknotes is made of vegetable fibers, paper made of synthetic fibers or a polymer sheet made of synthetic resin may be used in order to improve the properties such as durability, water resistance, and security. Banknotes made of polymer sheets are called polymer banknotes. Sheets may be provided with a variety of security features. For example, polymer banknotes may be provided with a clear window (transparent window) so as to prevent counterfeiting.

For an exemplary technique of detecting passage of a medium including a transparent portion, Patent Literature 1 discloses a detection device in which, for example, a traveling path of a light-transmissive film is set to be oblique to a light path from a light-emitting element to a light-receiving element and the reflectivity on the surface and inner surface of the film are increased to reduce the transmissive light, thereby apparently reducing the light transmittance of the light-transmissive film and improving the ability to detect the light-transmissive film.

For an exemplary technique of detecting a transparent material such as glass, Patent Literature 2 discloses a photoelectrically sensing device in which the incident angle θ of light emitted from a light-emitting unit toward a transparent material and applied to the transparent material is tilted at an angle at which the reflectivity on a surface of the transparent material is not negligible, such as 40° or greater.

For an exemplary technique of detecting a sheet to be transported along a sheet transport path of an imaging device, Patent Literature 3 discloses a light-receiving sheet sensor including a polarizing beam splitter that splits sheet-detecting light into P-polarized light and S-polarized light, the sheet-detecting light being light passed through a sheet under transport in the transport path or light reflected on the sheet and including information relating to the type of the sheet, a P-polarized light sensor that detects the intensity of the P-polarized light emitted from the polarizing beam splitter, and an S-polarized light sensor that detects the intensity of the S-polarized light emitted from the polarizing beam splitter.

JP H07 98247 A discloses an optical device which is less affected by the position fluctuation and inclination fluctuation of an object to be detected and can discriminate the type of the object to be detected and detect its presence or absence. An LED is laid out inside an enclosure as a light emitting means for emitting light to an object to be detected and light emitted from the LED is projected from the oblique direction for the object to be detected. Projection light emitted to the object to be detected is reflected by the object to be detected and is received by a light reception means which is laid out inside the enclosure The light reception means is constituted of a polarization beam splitter and first and second photodetector and The polarization beam splitter reflects S polarization constituents out of reflection light entering in oblique direction on the surface of the polarization beam splitter and then projects it to the first photodetector Also, P polarization constituent is transmitted through the polarization beam splitter and is projected to the second light reception element.

US 2015/151938 A1 discloses: A sheet discriminator, which is incorporated in an image forming apparatus and an image forming system, includes a sheet loader on which a recording medium is loaded, an information detector including a light emitter to emit light to a surface of the recording medium loaded on the sheet loader and a light receiver to receive the light emitted by the light emitter and detecting information of the recording medium, a sheet distinguisher to distinguish a type of the recording medium based on the information detected by the information detector, and a light emission controller to control activation and stop of the light emitter and activate the light emitter before the information detector starts detection of the information of the recording medium.

EP 0 628 787 A2 discloses: An optical sensing device including a light source, polarizing beam splitter, and a pair of photodectors. In a preferred embodiment, the device includes a reflecting device behind the polarizing device to allow the detectors to be positioned on one side of the polarizing device to make it more compact. The optical sensing device allows an object to be positioned at various angles and still provide consistent sensing, since the device compares one component of polarized light with respect to the other component of polarized light.

CITATION LIST

Patent Literature

Patent Literature 1: JP S61-61087 A
Patent Literature 2: JP 2010-203834 A
Patent Literature 3: JP 2006-347743 A

SUMMARY OF INVENTION

Technical Problem

The techniques disclosed in Patent Literature documents 1 and 2 aim to ensure the attenuated amount of light passed through a medium to be detected by applying the light obliquely to the medium to be detected to increase the reflectivity. Still, the detecting ability needs to be further improved.

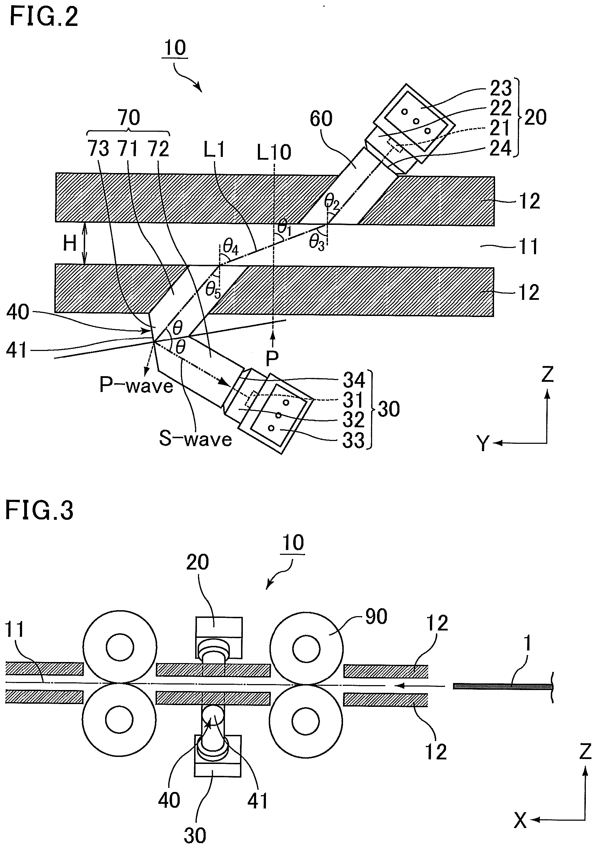

The technique of Patent Literature 3 splits the sheet-detecting light passed through a sheet into the P-polarized light and the S-polarized light and detects them. Still, as illustrated in Fig. 3A, the sheet-detecting light is substantially vertically incident on the sheet, so that the light passed through the sheet is hardly attenuated when the sheet is transparent. This makes it difficult to detect passage of the sheet.

In response to the above issues, an object of the present invention is to provide a medium passage detection device and a pair of medium passage detection devices having an excellent ability to detect a medium including a transparent portion.

Solution to Problem

One aspect of the present invention is a medium passage detection device for optically detecting passage of a medium under transport in a transport path, the medium passage detection device comprising:

a light-emitting unit configured to emit a light beam including an S-wave component and a P-wave component to the transport path;
an S-wave-extracting unit configured to separate the S-wave component included in the light beam emitted from the light-emitting unit; and
a light-receiving unit configured to receive the S-wave component that is passed through the medium under transport in the transport path and separated by the S-wave-extracting unit, and
the light beam emitted from the light-emitting unit including an optical axis and, in the transport path, an angle being formed between the optical axis and
a direction perpendicular to the transport path, the angle being greater than or equal to 60° and less than 90°,
a detecting unit configured to detect the presence or absence of the medium based on an attenuated amount or attenuation percentage of an output signal from the light-receiving unit, wherein the detecting unit judges that the medium is present

- either when an output signal from the light-receiving unit is lower than a percentage of an initial value,
- or when an attenuated amount or attenuation percentage of the output signal from the light-receiving unit with respect to the initial value, is not lower than a threshold stored in a memory,

where said initial value is an output value from the light-receiving unit at a stage before a medium is under transport in the transport path.

In the above aspect of the present invention, the S-wave-extracting unit is configured to separate the S-wave component before the light beam emitted from the light-emitting unit passes through the medium.

In the above aspect of the present invention, the S-wave-extracting unit is configured to separate the S-wave component after the light beam emitted from the light-emitting unit passes through the medium.

In the above aspect of the present invention, the light-emitting unit is configured to emit infrared light.

In the above aspect of the present invention, the S-wave-extracting unit comprises an interface between substances including different refractive indexes, and the interface is provided to allow the light beam emitted from the light-emitting unit to be at an incident angle that is substantially equal to Brewster's angle.

In the above aspect of the present invention, the light-emitting unit and the light-receiving unit are provided on a first side of the transport path, and the S-wave-extracting unit is provided on a second side of the transport path and reflects the S-wave component included in the light beam emitted from the light-emitting unit toward the first side of the transport path.

In the above aspect of the present invention, the S-wave-extracting unit comprises a polarizing film.

In the above aspect of the present invention, the S-wave-extracting unit comprises a polarizing beam splitter.

Another aspect of the present invention is a pair of medium passage detection devices comprising two medium passage detection devices, each of the two medium passage detection devices being the above medium passage detection device, the two medium passage detection devices being provided to allow the two respective optical axes of the light beams emitted from the two respective light-emitting units to cross each other at opposite angles in the transport path.

In the above aspect of the present invention, in each of the two medium passage detection devices, the light-emitting unit and the light-receiving unit are provided on a same side of the transport path.

In the above aspect of the present invention, the two optical axes pass the transport path at three sites, and the two optical axes cross each other at one of the three sites.

In the above aspect of the present invention, the two optical axes pass the transport path at two sites, and the two optical axes cross each other at the two sites.

In the above aspect of the present invention, each of the two medium passage detection devices comprises a reflecting unit that reflects the light beam emitted from the light-emitting unit of the other medium passage detection device.

In the above aspect of the present invention, each of the two medium passage detection devices includes, in an optical path of the light beam emitted from the respective light-emitting unit, two totally reflecting units each totally reflecting the light beam.

Still another aspect of the present invention is a pair of medium passage detection devices comprising two medium passage detection devices, each of the two medium passage detection devices being the above medium passage detection device, the two medium passage detection devices being provided to allow the two respective optical axes of the light beams emitted from the two respective light-emitting units to cross each other at opposite angles in the transport path, the two optical axes passing the transport path at one site, the two optical axes crossing each other at the one site.

In the above aspect of the present invention, each of the two medium passage detection devices includes, in an optical path of the light beam emitted from the respective light-emitting unit, two totally reflecting units each totally reflecting the light beam.

Advantageous Effects of Invention

The medium passage detection device and the pair of medium passage detection devices of the present invention can have an excellent ability to detect a medium including a transparent portion.

BRIEF DESCRIPTION OF THE DRAWINGS

Figs. 1(a) to 1(c) are each a schematic plan view of a preferred example of a sheet including a transparent portion to be detected by a sheet passage detection device of Embodiment 1.

Fig. 2 is a schematic view of the sheet passage detection device of Embodiment 1 observed along a sheet transport direction.

Fig. 3 is a schematic view of the sheet passage detection device of Embodiment 1 observed from a side.

Fig. 4 is a schematic view of a light beam incident from a medium including a refractive index $n_1$ to a medium including a refractive index $n_2$.

Fig. 5 is a schematic view of the sheet passage detection device of Embodiment 1 observed along the sheet transport direction, illustrating exemplary changes of intensities of a P-wave component and an S-wave component when no sheet is transported in a transport path.

Fig. 6 is a schematic view of the sheet passage detection device of Embodiment 1 observed along the sheet transport direction, illustrating exemplary changes of intensities of a P-wave component and an S-wave component when a sheet is transported in the transport path.

Fig. 7 is a schematic view of a sheet passage detection device of Embodiment 2 observed along the sheet transport direction.

Fig. 8 is a schematic view of the sheet passage detection device of Embodiment 2 observed along the sheet transport direction, illustrating exemplary changes of intensities of a P-wave component and an S-wave component when no sheet is transported in a transport path.

Fig. 9 is a schematic view of the sheet passage detection device of Embodiment 2 observed along the sheet transport direction, illustrating exemplary changes of intensities of a P-wave component and an S-wave component when a sheet is transported in the transport path.

Fig. 10 is a schematic view of a sheet passage detection device of Embodiment 3 observed along the sheet transport direction.

Fig. 11 is a schematic view of a sheet passage detection device of Embodiment 4 observed along the sheet transport direction.

Fig. 12 is a schematic view of a sheet passage detection device of Embodiment 5 observed along the sheet transport direction.

Fig. 13 is a schematic view of a pair of sheet passage detection devices of Embodiment 6 observed along the sheet transport direction.

Fig. 14 is an enlarged schematic view of a central portion of Fig. 13 with a folded sheet being under transport.

Fig. 15 is a schematic view of a pair of sheet passage detection devices of Embodiment 7 observed along the sheet transport direction.

Fig. 16 is a schematic view of a pair of sheet passage detection devices of Embodiment 8 observed along the sheet transport direction.

Fig. 17 is a schematic view of a pair of sheet passage detection devices of Embodiment 9 observed along the sheet transport direction.

Fig. 18 is a schematic view of a pair of sheet passage detection devices of Embodiment 10 observed along the sheet transport direction.

Fig. 19 is a schematic perspective view of a pair of sheet passage detection devices of Embodiment 11.

Fig. 20 is a schematic exploded perspective view of a housing of the pair of sheet passage detection devices of Embodiment 11.

Fig. 21 is a schematic view of the pair of sheet passage detection devices of Embodiment 11 observed along the sheet transport direction.

Fig. 22 is a schematic perspective view of a pair of sheet passage detection devices of Embodiment 12.

Fig. 23 is a schematic view of the pair of sheet passage detection devices of Embodiment 12 observed along the sheet transport direction.

DESCRIPTION OF EMBODIMENTS

(Embodiment 1)

Preferred embodiments of the medium passage detection device of the present invention are described below with reference to the drawings. The present embodiment relates to a sheet passage detection device to be used for detecting passage of a sheet. The sheet passage detection device of the present embodiment is mounted on a sheet handling device and is used for detecting passage of a sheet under long edge feed in a transport path inside the sheet handling device.

A sheet to be detected by the sheet passage detection device of the present embodiment may be of any type, and examples thereof include banknotes, gift vouchers, checks, documents of value, and card-shaped media. Although paper usually used for banknotes is made of vegetable fibers, paper made of synthetic fibers or a polymer sheet made of synthetic resin may be used in order to improve the properties such as durability, water resistance, and security. Banknotes made of polymer sheets are called polymer banknotes.

The sheet to be detected may be one consisting of an opaque portion that blocks light. Still, the sheet to be detected is preferably one including at least partially a transparent portion that transmits at least light within the visible range (visible light) and/or infrared light. The sheet to be detected is preferably one formed from a polymer sheet. The sheet to be detected may also be a sheet (hybrid sheet) whose transparent portion is formed from a polymer sheet and whose opaque portion is formed from paper made of vegetable fibers or synthetic fibers. The sheet to be detected may be one partially provided with a specularly reflecting unit including a reflecting surface, such as a rainbow hologram.

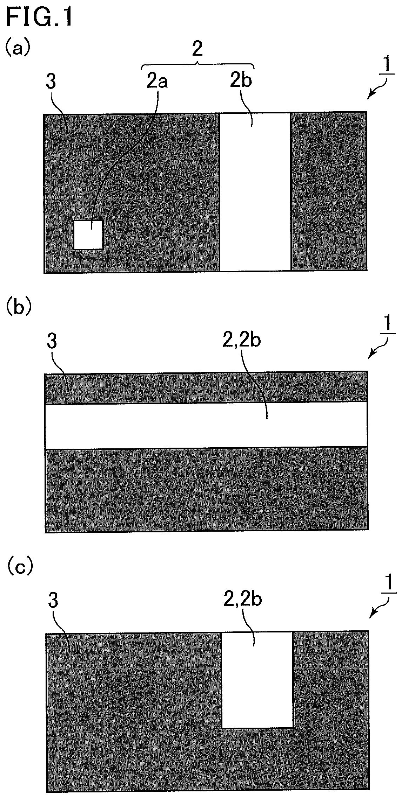

With reference to Fig. 1, described below is an example of a sheet preferred as a detection target of the sheet passage detection device of the present embodiment. As illustrated in Fig. 1(a), this sheet (medium) 1 is provided with clear windows 2a and 2b as transparent portions 2 that transmit visible light and infrared light respectively at a lower left portion and a right portion. The clear window 2a is provided in the form of an island and is surrounded by an opaque portion 3 that blocks light. The clear window 2b is provided in the form of a band and extends entirely from one edge to the other edge of the sheet 1. In the present embodiment, as illustrated in Fig. 1(a), the clear window 2b is provided along a short-edge direction that corresponds to the transport direction. Still, as illustrated in Fig. 1(b), it may be provided along a long edge direction. As illustrated in Fig. 1(c), the band-shaped clear window 2b may be provided from one edge to the front of the other edge of the sheet 1.

As illustrated in Fig. 2, a sheet passage detection device (medium passage detection device) 10 of the present embodiment includes a light-emitting unit 20 provided above a transport path 11 in which the sheet 1 is to be transported, and an S-wave-extracting unit 40 and a light-receiving unit 30 provided below the transport path 11. The sheet passage detection device 10 further includes a light-guiding unit 60 provided between the transport path 11 and the light-emitting unit 20 and a light-guiding unit 70 provided between the transport path 11 and the light-receiving unit 30. The transport path 11 is a gap between a pair of transport guides 12 provided parallel to each other. The height H of the transport path 11, i.e., the distance between the pair of the transport guides 12 may be 4 mm, for example. In Fig. 2, a sheet 1 is to be transported into or out of the paper in the sheet handling device.

In order to allow the sheet 1 to move in the transport path 11, the sheet handling device is provided with a transport device such as a plurality of rollers 90, as illustrated in Fig. 3. The transport device, such as the rollers 90, is driven by a driving device such as a motor not illustrated. As the transport device is driven by the driving device, for example, as the rollers 90 are rotationally driven by a motor, the sheet 1 is transported in the transport path 11 in the X-axis positive direction (in Fig. 3, from right to left of the sheet passage detection device 10) and passes the site where the sheet passage detection device 10 is provided. The sheet 1 may be transported in the transport path 11 in the X-axis negative direction (in Fig. 3, from left to right of the sheet passage detection device 10).

The light-emitting unit 20 emits a light beam (a non-polarized light beam) including an S-wave component (an S-polarized light beam) and a P-wave component (a P-polarized light beam) to the sheet 1. As illustrated in Fig. 2 and Fig. 3, the light-emitting unit 20 is provided above the transport path 11. The light beam emitted from the light-emitting unit 20 obliquely crosses the transport path 11 and travels toward the S-wave-extracting unit 40. As illustrated in Fig. 2, the light-emitting unit 20 includes a light-emitting element 21 that includes a light-emitting diode (LED), for example, a substrate (not illustrated) with the light-emitting element 21 mounted thereon, a housing 22 that accommodates and protects these components, and a terminal unit 23 provided at one end of the housing 22. The housing 22 includes a protecting member 24 that is provided to face the light-emitting surface of the light-emitting element 21 (that transmits a light beam emitted from the light-emitting element 21). The light-emitting unit 20 emits a light beam including an optical axis L1 toward the transport path 11 so that, in the transport path 11, an angle $\theta_1$ of greater than or equal to 60° and less than 90° is formed between the optical axis L1 and a direction L10 perpendicular to the transport path 11.

The light beam emitted from the light-emitting unit 20 may be of any type (any wavelength). Preferably, the light-emitting unit 20 emits infrared light. Such an embodiment can reduce attenuation of light due to the influence of dust, enabling more secure detection of the sheet 1. Further, an infrared light source is inexpensive, which can reduce the cost of producing the sheet passage detection device 10.

The light-guiding unit 60 has a function of guiding the light beam emitted from the light-emitting unit 20 toward the transport path 11. The light-guiding unit 60 includes a cylindrical or prismatic light-guiding unit provided obliquely toward the light-receiving unit 30 relative to the direction L10 perpendicular to the transport path 11. A first end surface of the light-guiding unit 60 is a plane perpendicular to the long-edge direction of the light-guiding unit 60 and is in contact with the light-emitting unit 20. A second end surface is a plane and provided parallel to the transport path 11. In other words, the second end surface (the end surface on the transport path 11 side) of the light-guiding unit 60 is a plane parallel to the transport path 11, giving a shape such that a cylindrical or prismatic light-guiding unit is cut obliquely.

The light-guiding unit 70 has a function of guiding the light beam incident from the transport path 11 toward the light-receiving unit 30. The light-guiding unit 70 has a V-shaped connected structure including a cylindrical or prismatic light guide 71 provided obliquely relative to the direction L10 perpendicular to the transport path 11 and a cylindrical or prismatic light guide 72 provided obliquely relative to the direction L10 perpendicular to the transport path 11. The end surface of the light guide 71 on the transport path 11 side is a plane parallel to the transport path 11, giving a shape such that a cylindrical or prismatic light-guiding unit is cut obliquely. The end surface of the light guide 72 on the light-receiving unit 30 side is a plane perpendicular to the long-edge direction of the light guide 72 and in contact with the light-receiving unit 30. The surface of a V-shaped connection 73 of the light-guiding unit 70 opposite to the light-receiving unit 30 is positioned outside the transport guide 12 and is in contact with the air.

The light-guiding units 60 and 70 are each formed from a transparent material. Specific examples of the transparent material include acrylic resin and glass.

The light beam emitted from the light-emitting unit 20 reaches the transport path 11 through the light-guiding unit 60, obliquely crosses the transport path 11 so as to be away from the light-emitting unit 20, and enters the light-guiding unit 70.

The S-wave-extracting unit 40 separates the S-wave component from the light beam emitted from the light-emitting unit 20, i.e., the light beam including the S-wave component and the P-wave component emitted from the light-emitting unit 20. In the present embodiment, the S-wave-extracting unit 40 utilizes the fact that the P-wave component has a reflectivity of 0 at Brewster's angle to separate the S-wave component. Specifically, the S-wave-extracting unit 40 includes an interface 41 between the air and the light-guiding unit 70 including different refractive indexes. The interface 41 corresponds to the surface of the connection 73 of the light-guiding unit 70. The interface 41 is a plane, is positioned outside the transport guide 12, and is in contact with the air. The interface 41 is provided to allow the incident angle θ of the light beam emitted from the light-emitting unit 20 to be substantially equal to Brewster's angle α.

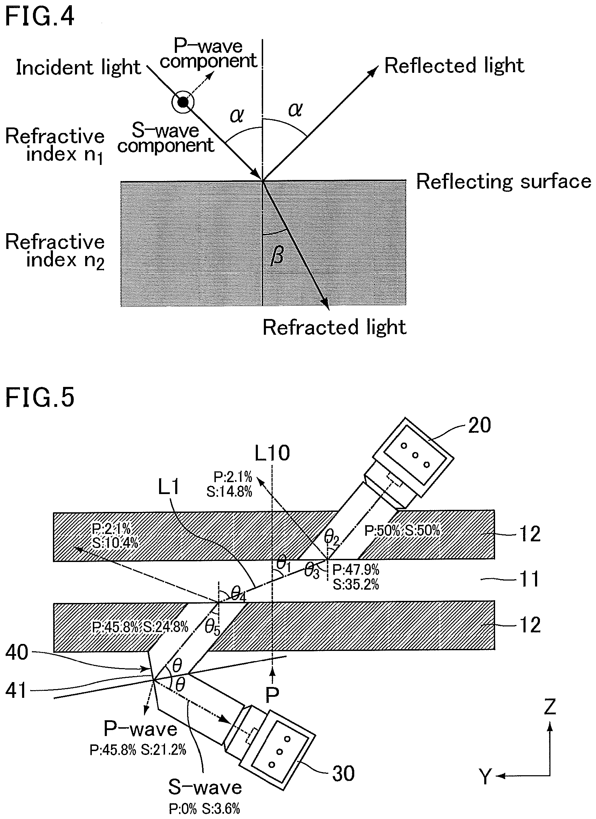

As illustrated in Fig. 4, when a light beam is incident from a medium including a refractive index $n_1$ to a medium including a refractive index $n_2$, the reflectivity $r_p$ of the P-wave component and the reflectivity $r_s$ of the S-wave component are respectively represented by the following formulas (1) and (2) based on the Fresnel equations. The angle α at which $r_p = 0$ is referred to as Brewster's angle, where the reflected light beam consists only of the S-wave component.

[Math. 1]

$$r_p = \frac{n_2 \cos\alpha - n_1 \cos\beta}{n_2 \cos\alpha + n_1 \cos\beta} = \frac{\tan(\alpha - \beta)}{\tan(\alpha + \beta)} \quad (1)$$

[Math. 2]

$$r_s = \frac{n_1 \cos\alpha - n_2 \cos\beta}{n_1 \cos\alpha + n_2 \cos\beta} = \frac{\sin(\alpha - \beta)}{\sin(\alpha + \beta)} \quad (2)$$

Thus, when the light beam including the S-wave component and the P-wave component emitted from the light-emitting unit 20 is incident on the interface 41, the light beam is reflected and refracted on the interface 41, so that the light beam reflected on the interface 41 consists substantially only of the S-wave component. Thereby, the S-wave-extracting unit 40 separates and extracts the S-wave component from the light beam including the S-wave component and the P-wave component.

That "the incident angle θ is substantially equal to Brewster's angle α" specifically means that the angle θ is within the range of α ± 5°, preferably within the range of α ± 1°, more preferably within the range of α ± 0.5°.

The two substances constituting the interface 41 may be any substances. For example, the surface of the light-guiding unit 70 may be coated with a resin including a refractive index different from that of the light-guiding unit 70, and this resin-coat layer and the light-guiding unit 70 may constitute the interface 41.

The difference in refractive index between the two substances constituting the interface 41 is not limited and may be set as appropriate.

The light-receiving unit 30 receives the S-wave component separated by the S-wave-extracting unit 40. As illustrated in Fig. 2, the light-receiving unit 30 is provided below the transport path 11. As illustrated in Fig. 2, the light-receiving unit 30 includes a light-receiving element 31, a substrate (not illustrated) with the light-receiving element 31 mounted thereon, a housing 32 that accommodates and protects these components, a terminal unit 33 provided at one end of the housing 32, and a detecting unit (not illustrated) that detects the sheet 1 based on an output (e.g., a current) from the light-receiving element 31. The housing 32 includes a protecting member 34 that is provided so as to face the light-receiving surface of the light-receiving element 31 (that transmits the light beam emitted from the light-emitting element 21).

The light-receiving element 31 receives a light beam and outputs a current corresponding to the amount of light received. Specific examples of the light-receiving element 31 include, but are not limited to, photodiodes (PD), phototransistors (PTr), and solar cells.

Next, the operation in the present embodiment is described. As illustrated in Fig. 2, the light-emitting unit 20 emits a light beam toward the transport path 11 so that, in the transport path 11, an angle $\theta_1$ of greater than or equal to 60° and less than 90° is formed between the optical axis L1 and the direction L10 perpendicular to the transport path 11. Specifically, the light beam emitted from the light-emitting unit 20 propagates in the light-guiding unit 60 and enters the transport path 11 at an incident angle $\theta_2$ and a refraction angle $\theta_3$ relative to the interface between the light-guiding unit 60 and the transport path 11 in contact with the light-guiding unit 60. The surface of the light-guiding unit 60 on the transport path 11 side is parallel to the transport path 11. Thus, in the transport path 11, the angle $\theta_3 = \theta_1$ is formed between the optical axis L1 of the light beam having entered the transport path 11 and the direction L10 perpendicular to the transport path 11.

The surface of the light guide 71 on the transport path 11 side is parallel to the transport path 11. Thus, the light beam having entered the transport path 11 propagates in the transport path 11 and enters the light guide 71 at an incident angle $\theta_4 = \theta_1$ and a refraction angle $\theta_5$ relative to the interface between the transport path 11 and the light guide 71 in contact with the transport path 11. The light beam having entered the light guide 71 is reflected on the interface 41 of the S-wave-extracting unit 40 provided to allow the incident angle θ to be substantially equal to Brewster's angle α. Almost the entire P-wave component travels into the air outside the light-guiding unit 70, while the S-wave component propagates in the light guide 72. The S-wave component propagating in the light guide 72 finally enters the light-receiving unit 30.

Each of the angles $\theta_1$ to $\theta_5$ is an acute angle formed by the optical axis L1 of the light beam with the direction L10 perpendicular to the transport path 11. The refractive indexes of the light-guiding units 60 and 70 are greater than the refractive index of the air. Thus, the angles $\theta_2$ and $\theta_5$ formed by the optical axes L1 in the light-guiding unit 60 and the light-guiding unit 70 with the direction L10 perpendicular to the transport path 11 are respectively less than the angles $\theta_3$ and $\theta_4$ formed by the optical axis L1 in the transport path 11 (the air) with the direction L10 perpendicular to the transport path 11.

When a sheet 1 is absent on the optical axis L1 of the light beam emitted from the light-emitting unit 20, i.e., on the medium-detecting position P in the transport path 11, the light beam including the P-wave component and the S-wave component passes through the transport path 11 and is received by the light-receiving unit 30 without attenuation by the sheet 1. The medium-detecting position P is present between the light-emitting unit 20 and the light-receiving unit 30.

When a transparent portion 2 of a sheet 1 is present on the optical axis L1 of the light beam emitted from the light-emitting unit 20, i.e., on the medium-detecting position P, the light beam including the P-wave component and the S-wave component emitted so as to be at an angle $\theta_1$ of greater than or equal to 60° and less than 90° obliquely crosses the sheet 1. This increases the reflectivity on the surfaces of the transparent portion 2 when the light beam enters the transparent portion 2 and exits from the transparent portion 2 and thus reduces the transmitted light, thereby reducing the apparent transmittance of the transparent portion 2. The S-wave-extracting unit 40 separates the S-wave component from the light beam including the S-wave component and the P-wave component. The light-receiving unit 30 receives the S-wave component separated by the S-wave-extracting unit 40. According to the above formulas (1) and (2), the reflectivity of the S-wave component is always greater than that of the P-wave component regardless of the incident angle. This can further increase the attenuated amount and attenuation percentage of the light beam passing through the transparent portion 2. As a result, the difference in amount of light received by the light-receiving unit 30 can be increased between the transparent portion 2 of the sheet 1 and a portion where the sheet 1 itself is absent, which can improve the ability to detect a transparent portion 2 of a sheet 1.

The angle $\theta_1$ is preferably 70° or greater. In such an embodiment, the transmittance of light to pass through the transparent portion 2 can effectively be reduced. This enables more secure detection of a sheet 1 including a transparent portion 2.

When an opaque portion 3 of a sheet 1 is present on the optical axis L1 of the light beam emitted from the light-emitting unit 20, i.e., on the medium-detecting position P, at least part of the light beam is blocked by the opaque portion 3. Thus, the light beam passing through the opaque portion 3 is attenuated and this attenuated light beam is received by the light-receiving unit 30. Thus, the amount of light received by the light-receiving unit 30 is smaller in the presence of a transparent portion 2 or an opaque portion 3 of a sheet 1 on the optical axis L1 of the light beam than in the absence of a sheet 1 on the optical axis L1 of the light, and the output value, e.g., the output current, from the light-receiving element 31 is smaller in the latter case than in the former case. Accordingly, the detecting unit can detect the sheet 1 based on the amount of light received by the light-receiving element 31, i.e., based on the output signal from the light-receiving element 31.

The detecting unit detects the sheet 1 based on the attenuated amount of the output signal from the light-receiving unit 30 (light-receiving element 31). Specifically, in this case, the detecting unit first acquires an output value from the light-receiving element 31 at a stage before the sheet 1 is transported, and a% (where 0 < a < 100) of the value is stored as a threshold in a memory (not illustrated). Next, the detecting unit successively acquires output values from the light-receiving element 31 by a predetermined cycle during transport of the sheet 1. Then, the detecting unit judges that the sheet 1 is present when the output value is lower than the threshold stored in the memory, while judges that the sheet 1 is absent when the output value is not lower than the threshold stored in the memory. Thereby, the sheet 1 is detected.

Another method in which the detecting unit detects the sheet 1 based on the attenuated amount of the output signal from the light-receiving unit 30 (light-receiving element 31) may be the following. In this case, first, the detecting unit acquires an output value from the light-receiving element 31 at a stage before the sheet 1 is transported, and this value is stored as an initial value in a memory (not illustrated). Next, the detecting unit successively acquires output values from the light-receiving element 31 by a predetermined cycle during transport of the sheet 1. The detecting unit also calculates the attenuated amount of each acquired output value relative to the initial value based on the following formula.

```
Attenuated amount = initial value - output value
```

Then, the detecting unit judges that the sheet 1 is present when the attenuated amount is not lower than a threshold stored in the memory, while judges that the sheet 1 is absent when the attenuated amount is lower than the threshold stored in the memory. Thereby, the sheet 1 is detected.

The detecting unit may also detect the sheet 1 based on the attenuation percentage of the output signal from the light-receiving unit 30 (light-receiving element 31). Specifically, in this case, the detecting unit first acquires an output value from the light-receiving element 31 at a stage before the sheet 1 is transported, and this value is stored as an initial value in the memory (not illustrated). Next, the detecting unit successively acquires output values from the light-receiving element 31 by a predetermined cycle during transport of the sheet 1. The detecting unit also calculates the attenuation percentage of each acquired output value relative to the initial value based on the following formula.

Attenuation percentage (%) = (initial value - output value)/initial value $\times$ 100

Then, the detecting unit judges that the sheet 1 is present when the attenuation percentage is not lower than a threshold stored in the memory, while judges that the sheet 1 is absent when the attenuation percentage is lower than the threshold stored in the memory. Thereby, the sheet 1 is detected.

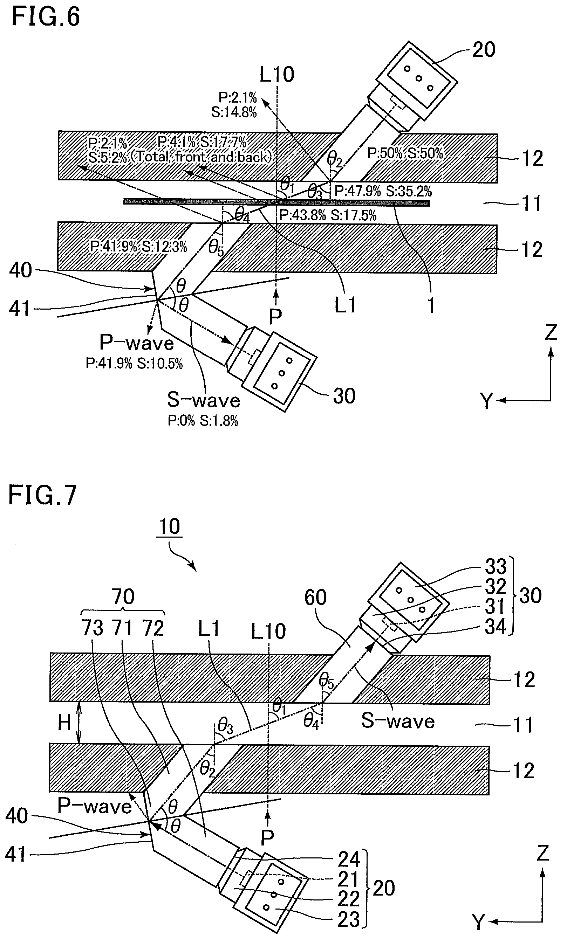

With reference to Figs. 5 and 6, specific examples are used hereinbelow to further describe the effects of the structure of detecting a transparent portion 2 of a sheet 1 based on the S-wave component passed through the sheet 1. The following describes the case where the angles $\theta_1$, $\theta_3$, and $\theta_4$ are 70°, the angles $\theta_2$ and $\theta_5$ are 39.1°, the refractive index of the air is 1, the refractive indexes of the transparent portion 2 of the sheet 1 and the light-guiding units 60 and 70 are 1.49, and the incident angle $\theta$ on the interface 41 is equal to Brewster's angle $\alpha$ (= 34°). The light beam emitted from the light-emitting unit 20 includes 50% P-wave component and 50% S-wave component.

As illustrated in Fig. 5, when the sheet 1 is absent on the optical axis L1 of the light, the light beam including 50% P-wave component and 50% S-wave component emitted from the light-emitting unit 20 is reflected and refracted at a reflectivity of 4.3% (P-wave) and of 29.5% (S-wave) on the end surface of the light-guiding unit 60 on the transport path 11 side. The light beam thereby becomes a light beam including 47.9% P-wave component and 35.2% S-wave component and propagates in the transport path 11. Next, the light beam is reflected and refracted at a reflectivity of 4.3% (P-wave) and of 29.5% (S-wave) on the end surface of the light guide 71 on the transport path 11 side. The light beam thereby becomes a light beam including 45.8% P-wave component and 24.8% S-wave component and propagates in the light guide 71. Then, the light beam is reflected and refracted at a reflectivity of 0% (P-wave) and of 14.6% (S-wave) on the interface 41. The light beam thereby becomes a light beam consisting only of 3.6% S-wave component and propagates in the light guide 72, finally being received by the light-receiving unit 30.

As illustrated in Fig. 6, when the sheet 1 is present on the optical axis L1 of the light, the light beam including 50% P-wave component and 50% S-wave component emitted from the light-emitting unit 20 is reflected and refracted at a reflectivity of 4.3% (P-wave) and of 29.5% (S-wave) on the end surface of the light-guiding unit 60 on the transport path 11 side. The light beam thereby becomes a light beam including 47.9% P-wave component and 35.2% S-wave component and propagates in the transport path 11. Next, the light beam is reflected and refracted at a reflectivity of 4.3% (P-wave) and of 29.5% (S-wave) on both the front and back surfaces of the transparent portion 2 of the sheet 1. The light beam thereby becomes a light beam including 43.8% P-wave component and 17.5% S-wave component and propagates in the transport path 11. Next, the light beam is reflected and refracted at a reflectivity of 4.3% (P-wave) and of 29.5% (S-wave) on the end surface of the light guide 71 on the transport path 11 side. The light beam thereby becomes a light beam including 41.9% P-wave component and 12.3% S-wave component and propagates in the light guide 71. Then, the light beam is reflected and refracted at a reflectivity of 0% (P-wave) and of 14.6% (S-wave) on the interface 41. The light beam thereby becomes a light beam consisting only of 1.8% S-wave component and propagates in the light guide 72, finally being received by the light-receiving unit 30.

Therefore, in both the absence and the presence of the sheet 1 on the optical axis L1 of the light, the light-receiving unit 30 receives respectively the light beam consisting only of 3.6% S-wave component and the light beam consisting only of 1.8% S-wave component. The attenuation percentage of the light beam (S-wave component) passing through the transparent portion 2 is 50% as calculated by (3.6% - 1.8%) $\div$ 3.6% $\times$ 100.

Assuming that no S-wave-extracting unit 40 is provided, the light-receiving unit 30 is to receive a light beam at a stage before entering the S-wave-extracting unit 40. Thus, in the absence and presence of the sheet 1 on the optical axis L1 of the light beam, the light-receiving unit 30 receives respectively the light beam including 45.8% P-wave component and 24.8% S-wave component (70.6% in total) and the light beam including 41.9% P-wave component and 12.3% S-wave component (54.2% in total). The attenuation percentage of the light beam (P-wave component and S-wave component) passing through the transparent portion 2 is about 23% as calculated by (70.6% - 54.2%) $\div$ 70.6% $\times$ 100, which is greatly lower than 50% in the case of providing the S-wave-extracting unit 40.

Accordingly, detecting the transparent portion 2 of the sheet 1 based on the S-wave component passed through the sheet 1 can improve the ability to detect a transparent portion 2.

In detecting the transparent portion 2 based on the S-wave component, the intensity of the S-wave component received by the light-receiving unit 30 is lower than the intensity of the light beam emitted from the light-emitting unit 20.

Still, this is not a matter in detecting the sheet 1 as long as the attenuated amount or the attenuation percentage is ensured. If necessary, the amount of light emitted or the gain of light reception may be increased to ensure the output level of the light-receiving unit 30.

The sheet passage detection device 10 of the present embodiment performs the aforementioned light emission and light reception to detect the presence or absence of the sheet 1 under transport in the transport path 11. In other words, when the sheet 1 is transported and passes the medium-detecting position P positioned between the light-emitting unit 20 and the light-receiving unit 30, the amount of light received by the light-receiving unit 30 (amount of received light) changes. Determining this change in amount of light received by the light-receiving unit 30 enables detection of the presence or absence of the sheet 1.

In the sheet passage detection device 10 of the present embodiment, the presence of the light-guiding unit 60 and the light-guiding unit 70 respectively between the transport path 11 and the light-emitting unit 20 and between the transport path 11 and the light-receiving unit 30 enables control of the angle of light entering the transport path 11 from the light-emitting unit 20 and the angle of light entering the S-wave-extracting unit 40 from the transport path 11. This can lead to a shortened distance from the light-emitting unit 20 to the S-wave-extracting unit 40 and to the light-receiving unit 30. As a result, a small sheet passage detection device 10 can be achieved.

The light beam emitted from the light-emitting unit 20 preferably enters the transport path 11 from the light-guiding unit 60 at an incident angle less than the critical angle. In other words, the angle $\theta_2$ is preferably less than the critical angle of the light-guiding unit 60 relative to the transport path 11 (air). In such an embodiment, the light beam emitted from the light-emitting unit 20 can more securely propagate to the transport path 11.

In addition to the aforementioned structure, the sheet passage detection device 10 further includes components such as a conventionally known light source control unit (not illustrated) that controls light emission from the light-emitting unit 20 and a conventionally known output control unit (not illustrated) that controls the output from the light-receiving unit 30.

The sheet passage detection device 10 may be used in any applications. An exemplary application thereof is a timing sensor for sheet recognition devices such as banknote recognition devices, in other words, a sensor for determining the timings of recognition processing by a sheet recognition device. In this case, the sheet recognition unit can be prevented from executing recognition processing on a sheet 1 including a transparent portion 2 at an inappropriate timing. Another exemplary application is a sensor that detects a sheet 1 under transport in a sheet handling device such as a banknote depositing and dispensing device. In this case, defects such as false jam can be prevented from occurring in the sheet handling device. The sheet passage detection device 10 is preferably one that detects at least one selected from passage, arrival, and the presence or absence of a sheet 1. The term false jam herein means a phenomenon in which even though a sheet 1 is not actually jammed, a sheet handling device judges that jam occurs to stop the operation due to, for example, malfunction of the optical sensor itself.

Examples of the contents of the recognition processing by the sheet recognition unit include, but are not limited to, a variety of functions such as recognition of the type of a sheet 1 (the denomination in the case of a banknote), determination of the authenticity and fitness of a sheet 1, and reading of symbols such as numbers and letters printed on a sheet 1.

As described above, the sheet passage detection device 10 of the present embodiment is a sheet passage detection device 10 for optically detecting passage of a sheet 1 under transport in the transport path 11, the sheet passage detection device including the light-emitting unit 20 configured to emit a light beam including the S-wave component and the P-wave component to the transport path 11, the S-wave-extracting unit 40 configured to separate the S-wave component included in the light beam emitted from the light-emitting unit 20, and the light-receiving unit 30 configured to receive the S-wave component that is passed through the sheet 1 under transport in the transport path 11 and separated by the S-wave-extracting unit 40, the light beam emitted from the light-emitting unit 20 including an optical axis and, in the transport path 11, an angle being formed between the optical axis and the direction L10 perpendicular to the transport path 11, the angle $\theta_1$ being greater than or equal to 60° and less than 90°.

The presence of the light-emitting unit 20 that emits a light beam toward the transport path 11 so that, in the transport path 11, an angle $\theta_1$ of greater than or equal to 60° and less than 90° is formed between the optical axis L1 and the direction L10 perpendicular to the transport path 11 allows the light beam emitted from the light-emitting unit 20 to obliquely cross a sheet 1. This can increase the distance by which the light beam passes through a transparent portion 2 of the sheet 1 and thus reduce the transmittance, and can increase the reflectivity on the surfaces of the transparent portion 2 when the light beam enters the transparent portion 2 and exits from the transparent portion 2 and thus reduce the transmitted light, thereby reducing the apparent transmittance of the transparent portion 2. Further, the S-wave-extracting unit 40 separates the S-wave component included in the light beam emitted from the light-emitting unit 20 and the light-receiving unit 30 receives the S-wave component that is passed through the sheet 1 and separated by the S-wave-extracting unit 40. This can further increase the attenuated amount and the attenuation percentage of the light beam passing through the transparent portion 2. As a result, the difference in amount of light received by the light-receiving unit 30 can be increased between the transparent portion 2 of the sheet 1 and a portion where the sheet 1 itself is absent, which can improve the ability to detect a transparent portion 2 of a sheet 1.

The S-wave-extracting unit 40 includes the interface 41 between substances including different refractive indexes, and the interface 41 is provided to allow the incident angle $\theta$ of the light beam emitted from the light-emitting unit 20 to be substantially equal to Brewster's angle $\alpha$. This enables providing the S-wave-extracting unit 40 at a reduced cost in comparison with the cases of using dedicated parts such as polarizing beam splitters and polarizing films to be described later.

In the present embodiment, the light-receiving unit 30 used may be a sensor for detecting a non-transparent medium. This may also contribute to cost reduction of the sheet passage detection device 10.

(Embodiment 2)

In the present embodiment, the features unique to the present embodiment are mainly described and the same contents as in Embodiment 1 are not repeated. The components having the same or similar function in the present embodiment and Embodiment 1 are provided with the same reference signs and the description of these components is not repeated in the present embodiment. The present embodiment is substantially the same as Embodiment 1, except that the positions of the light-emitting unit and the light-receiving unit are changed with each other.

As illustrated in Fig. 7, in the sheet passage detection device (medium passage detection device) 10 of the present embodiment, the light-emitting unit 20 is provided below the transport path 11 and is in contact with the end surface of the light guide 72 opposite to the connection 73. The light-receiving unit 30 is provided above the transport path 11 and is in contact with the end surface of the light-guiding unit 60 opposite to the transport path 11. Similar to Embodiment 1, the light-emitting unit 20 emits a light beam toward the transport path 11 so that, in the transport path 11, an angle $\theta_1$ of greater than or equal to 60° and less than 90° is formed between the optical axis L1 and the direction L10 perpendicular to the transport path 11.

The operation in the present embodiment is as follows. As illustrated in Fig. 7, the light beam emitted from the light-emitting unit 20 propagates in the light guide 72 and is reflected on the interface 41 of the S-wave-extracting unit 40 provided to allow the incident angle $\theta$ to be substantially equal to Brewster's angle $\alpha$. Almost the entire P-wave component travels into the air outside the light-guiding unit 70 and the S-wave component propagates in the light guide 71. The S-wave component propagating in the light guide 71 enters the transport path 11 at an incident angle $\theta_2$ and a refraction angle $\theta_3$ relative to the interface between the light guide 71 and the transport path 11 in contact with the light guide 71. The surface of the light guide 71 on the transport path 11 side is parallel to the transport path 11. Thus, in the transport path 11, the angle $\theta_3 = \theta_1$ is formed between the optical axis L1 of the S-wave component having entered the transport path 11 and the direction L10 perpendicular to the transport path 11.

The surface of the light-guiding unit 60 on the transport path 11 side is parallel to the transport path 11. Thus, the S-wave component having entered the transport path 11 propagates in the transport path 11 and enters the light-guiding unit 60 at an incident angle $\theta_4 = \theta_1$ and a refraction angle $\theta_5$ relative to the interface between the transport path 11 and the light-guiding unit 60 in contact with the transport path 11. The S-wave component having entered the light-guiding unit 60 and propagating in the light guide 72 finally enters the light-receiving unit 30.

When a sheet 1 is absent on the optical axis L1 of the light beam emitted from the light-emitting unit 20, i.e., on the medium-detecting position P in the transport path 11, the S-wave component separated by the S-wave-extracting unit 40 passes through the transport path 11 and is received by the light-receiving unit 30 without attenuation by the sheet 1.

When a transparent portion 2 of a sheet 1 is present on the optical axis L1 of the light beam emitted from the light-emitting unit 20, i.e., on the medium-detecting position P, the S-wave component emitted so as to be at an angle $\theta_1$ of greater than or equal to 60° and less than 90° and separated by the S-wave-extracting unit 40 obliquely crosses the sheet 1. This increases the reflectivity on the surfaces of the transparent portion 2 when the light beam enters the transparent portion 2 and exits from the transparent portion 2 and thus reduces the transmitted light, thereby reducing the apparent transmittance of the transparent portion 2. As described above, the reflectivity of the S-wave component is always greater than that of the P-wave component regardless of the incident angle. This can further increase the attenuated amount and attenuation percentage of the light beam passing through the transparent portion 2. As a result, the difference in amount of light received by the light-receiving unit 30 can be increased between the transparent portion 2 of the sheet 1 and a portion where the sheet 1 itself is absent, which can improve the ability to detect a transparent portion 2 of a sheet 1.

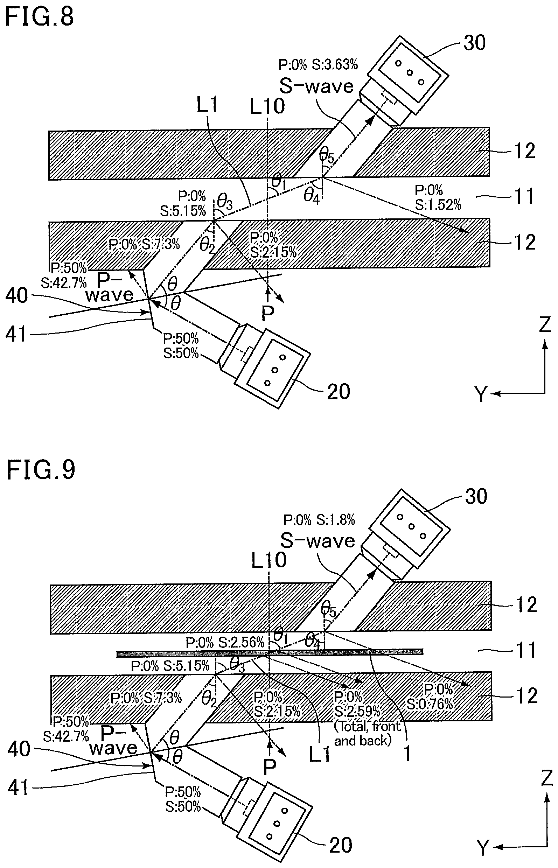

With reference to Figs. 8 and 9, specific examples are used hereinbelow to further describe the effects of the structure of detecting a transparent portion 2 of a sheet 1 based on the S-wave component passed through the sheet 1. The following describes the case where the angles $\theta_1$, $\theta_3$, and $\theta_4$ are 70°, the angles $\theta_2$ and $\theta_5$ are 39.1°, the refractive index of the air is 1, the refractive indexes of the transparent portion 2 of the sheet 1 and the light-guiding units 60 and 70 are 1.49, and the incident angle $\theta$ on the interface 41 is equal to Brewster's angle $\alpha$ (= 34°). The light beam emitted from the light-emitting unit 20 includes 50% P-wave component and 50% S-wave component.

As illustrated in Fig. 8, when the sheet 1 is absent on the optical axis L1 of the light, the light beam including 50% P-wave component and 50% S-wave component emitted from the light-emitting unit 20 is reflected and refracted at a reflectivity of 0% (P-wave) and of 14.6% (S-wave) on the interface 41. The light beam thereby becomes a light beam consisting only of 7.3% S-wave component and propagates in the light guide 71. Next, the light beam is reflected and refracted at a reflectivity (of 4.3% (P-wave) and) of 29.5% (S-wave) on the end surface of the light guide 71 on the transport path 11 side. The light beam thereby becomes a light beam consisting only of 5.15% S-wave component and propagates in the transport path 11. Then, the light beam is reflected and refracted at a reflectivity (of 4.3% (P-wave) and) of 29.5% (S-wave) on the end surface of the light-guiding unit 60 on the transport path 11 side. The light beam thereby becomes a light beam consisting only of 3.63% S-wave component and propagates in the light guide 71, finally being received by the light-receiving unit 30.

As illustrated in Fig. 9, when the sheet 1 is present on the optical axis L1 of the light, the light beam including 50% P-wave component and 50% S-wave component emitted from the light-emitting unit 20 is reflected and refracted at a reflectivity of 0% (P-wave) and of 14.6% (S-wave) on the interface 41. The light beam thereby becomes a light beam consisting only of 7.3% S-wave component and propagates in the light guide 71. Next, the light beam is reflected and refracted at a reflectivity (of 4.3% (P-wave) and) of 29.5% (S-wave) on the end surface of the light guide 71 on the transport path 11 side. The light beam thereby becomes a light beam consisting only of 5.15% S-wave component and propagates in the transport path 11. Next, the light beam is reflected and refracted at a reflectivity (of 4.3% (P-wave) and) of 29.5% (S-wave) on both the front and back surfaces of the transparent portion 2 of the sheet 1. The light beam thereby becomes a light beam consisting only of 2.56% S-wave component and propagates in the transport path 11. Then, the light beam is reflected and refracted at a reflectivity (of 4.3% (P-wave) and) of 29.5% (S-wave) on the end surface of the light-guiding unit 60 on the transport path 11 side. The light beam thereby becomes a light beam consisting only of 1.8% S-wave component and propagates in the light guide 71, finally being received by the light-receiving unit 30.

Therefore, in both the absence and the presence of the sheet 1 on the optical axis L1 of the light, the light-receiving unit 30 receives respectively the light beam consisting only of 3.63% S-wave component and the light beam consisting only of 1.8% S-wave component. The attenuation percentage of the light beam (S-wave component) passing through the transparent portion 2 is about 50% as calculated by (3.63% - 1.8%) ÷ 3.63% × 100.

Assuming that no S-wave-extracting unit 40 is provided, the following occurs. That is, when the sheet 1 is absent on the optical axis L1 of the light, the light beam including 50% P-wave component and 50% S-wave component emitted from the light-emitting unit 20 is reflected and refracted at a reflectivity of 4.3% (P-wave) and of 29.5% (S-wave) on the end surface of the light guide 71 on the transport path 11 side. The light beam thereby becomes a light beam including 47.9% P-wave component and 35.2% S-wave component and propagates in the transport path 11. Next, the light beam is reflected and refracted at a reflectivity of 4.3% (P-wave) and of 29.5% (S-wave) on the end surface of the light-guiding unit 60 on the transport path 11 side. The light beam thereby becomes a light beam including 45.8% P-wave component and 24.8% S-wave component and propagates in the light-guiding unit 60, finally being received by the light-receiving unit 30.

When the sheet 1 is present on the optical axis L1 of the light, the light beam including 50% P-wave component and 50% S-wave component emitted from the light-emitting unit 20 is reflected and refracted at a reflectivity of 4.3% (P-wave) and of 29.5% (S-wave) on the end surface of the light guide 71 on the transport path 11 side. The light beam thereby becomes a light beam including 47.9% P-wave component and 35.2% S-wave component and propagates in the transport path 11. Next, the light beam is reflected and refracted at a reflectivity of 4.3% (P-wave) and of 29.5% (S-wave) on both the front and back surfaces of the transparent portion 2 of the sheet 1. The light beam thereby becomes a light beam including 43.8% P-wave component and 17.5% S-wave component and propagates in the transport path 11. Then, the light beam is reflected and refracted at a reflectivity of 4.3% (P-wave) and of 29.5% (S-wave) on the end surface of the light-guiding unit 60 on the transport path 11 side. The light beam thereby becomes a light beam including 41.9% P-wave component and 12.3% S-wave component and propagates in the light-guiding unit 60, finally being received by the light-receiving unit 30.

Therefore, in the absence and presence of the sheet 1 on the optical axis L1 of the light, the light-receiving unit 30 receives respectively the light beam including 45.8% P-wave component and 24.8% S-wave component (70.6% in total) and the light beam including 41.9% P-wave component and 12.3% S-wave component (54.2% in total). The attenuation percentage of the light beam (P-wave component and S-wave component) passing through the transparent portion 2 is about 23% as calculated by (70.6% - 54.2%) ÷ 70.6% × 100, which is greatly lower than about 50% in the case of providing the S-wave-extracting unit 40.

Accordingly, as in Embodiment 1, detecting the transparent portion 2 of the sheet 1 based on the S-wave component passed through the sheet 1 can improve the ability to detect a transparent portion 2.

Further, as described in Embodiments 1 and 2, the S-wave-extracting unit 40 may separate the S-wave component from the light beam (including the S-wave component and the P-wave component) emitted from the light-emitting unit 20 before passage of the sheet 1 or may separate the S-wave component from the light beam (including the S-wave component and the P-wave component) emitted from the light-emitting unit 20 after passage of the sheet 1. Either case can lead to a substantially equal ability to detect a transparent portion 2.

(Embodiment 3)

In the present embodiment, the features unique to the present embodiment are mainly described and the same contents as in Embodiment 1 are not repeated. The components having the same or similar function in the present embodiment and Embodiment 1 are provided with the same reference signs and the description of these components is not repeated in the present embodiment. The present embodiment is substantially the same as Embodiment 1, except for the features described below.

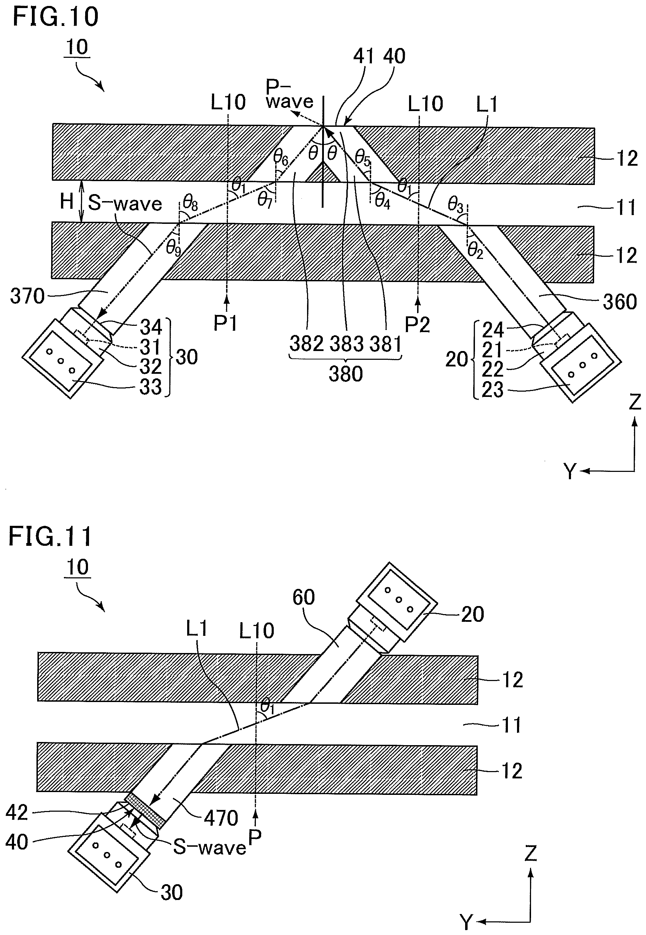

As illustrated in Fig. 10, in the present embodiment, the sheet passage detection device (medium passage detection device) 10 includes the light-emitting unit 20 and the light-receiving unit 30 provided below the transport path 11, a light-guiding unit 360 provided between the transport path 11 and the light-emitting unit 20, a light-guiding unit 370 provided between the transport path 11 and the light-receiving unit 30, and the S-wave-extracting unit 40 and a light-guiding unit 380 provided above the transport path 11. In Fig. 10, a sheet 1 is to be transported into or out of the paper in the sheet handling device. The positions of the light-emitting unit 20 and the light-receiving unit 30 may be changed with each other.

The light-guiding unit 360 has a function of guiding the light beam emitted from the light-emitting unit 20 toward the transport path 11. The light-guiding unit 360 includes a cylindrical or prismatic light-guiding unit provided obliquely toward the light-receiving unit 30 relative to the direction L10 perpendicular to the transport path 11. A first end surface of the light-guiding unit 360 is a plane perpendicular to the long-edge direction of the light-guiding unit 360 and is in contact with the light-emitting unit 20. A second end surface is a plane and provided parallel to the transport path 11. In other words, the second end surface (the end surface on the transport path 11 side) of the light-guiding unit 360 is a plane parallel to the transport path 11, giving a shape such that a cylindrical or prismatic light-guiding unit is cut obliquely.

The light-guiding unit 380 has a function of guiding the light beam incident from the transport path 11 toward the S-wave-extracting unit 40 and has a function of guiding the light beam reflected on the S-wave-extracting unit 40 toward the transport path 11. The light-guiding unit 380 has a V-shaped connected structure including a cylindrical or prismatic light guide 381 provided obliquely toward the light-emitting unit 20 relative to the direction L10 perpendicular to the transport path 11 and a cylindrical or prismatic light guide 382 provided obliquely toward the light-receiving unit 30 relative to the direction L10 perpendicular to the transport path 11. The end surfaces of the light guides 381 and 382 on the transport path 11 side are each a plane and provided parallel to the transport path 11. In other words, the end surfaces of the light guides 381 and 382 on the transport path 11 side are each a plane parallel to the transport path 11, giving a shape such that cylindrical or prismatic light-guiding units are cut obliquely. The surface opposite to the transport path 11 of the V-shaped connection 383 of the light-guiding unit 380 is a plane parallel to the transport path 11 and is in contact with the air.

The light-guiding unit 370 has a function of guiding the light beam incident from the transport path 11 toward the light-receiving unit 30. The light-guiding unit 370 includes a cylindrical or prismatic light-guiding unit provided obliquely toward the S-wave-extracting unit 40 relative to the direction L10 perpendicular to the transport path 11. A first end surface of the light-guiding unit 370 is a plane perpendicular to the long-edge direction of the light-guiding unit 370 and is in contact with the light-receiving unit 30. A second end surface is a plane and provided parallel to the transport path 11. In other words, the second end surface (the end surface on the transport path 11 side) of the light-guiding unit 370 is a plane parallel to the transport path 11, giving a shape such that a cylindrical or prismatic light-guiding unit is cut obliquely.

The light-guiding units 360, 370, and 380 are each formed from a transparent material. Specific examples of the transparent material include acrylic resin and glass.

The light beam emitted from the light-emitting unit 20 reaches the transport path 11 through the light-guiding unit 360, obliquely crosses the transport path 11 so as to be away from the light-emitting unit 20, and enters the light guide 381. The light beam having entered the light-guiding unit 380 is reflected on the S-wave-extracting unit 40 and reaches the transport path 11 through the light guide 382. The light beam having reached the transport path 11 obliquely crosses the transport path 11 so as to be away from the light-guiding unit 380 and enters the light-guiding unit 370.

The S-wave-extracting unit 40 includes the interface 41 between the air and the light-guiding unit 380 including different refractive indexes. The interface 41 corresponds to the surface of the connection 383 of the light-guiding unit 380, and the interface 41 is a plane parallel to the transport path 11 and is in contact with the air. The interface 41 is provided to allow the incident angle $\theta$ of the light beam emitted from the light-emitting unit 20 to be substantially equal to Brewster's angle $\alpha$. Thus, when the light beam including the S-wave component and the P-wave component emitted from the light-emitting unit 20 is incident on the interface 41, the light beam is reflected and refracted on the interface 41. The light beam reflected on the interface 41 consists substantially only of the S-wave component.

The term "parallel" herein means not only the complete parallelism but also substantial parallelism within the scope where the effects of the present invention are achieved.

Next, the operation in the present embodiment is described. As illustrated in Fig. 10, the light-emitting unit 20 emits a light beam toward the transport path 11 so that, in the transport path 11, an angle $\theta_1$ of greater than or equal to 60° and less than 90° is formed between the optical axis L1 and the direction L10 perpendicular to the transport path 11. Specifically, the light beam emitted from the light-emitting unit 20 propagates in the light-guiding unit 360 and enters the transport path 11 at an incident angle $\theta_2$ and a refraction angle $\theta_3$ relative to the interface between the light-guiding unit 360 and the transport path 11 in contact with the light-guiding unit 360. The surface of the light-guiding unit 360 on the transport path 11 side is parallel to the transport path 11. Thus, in the transport path 11, the angle $\theta_3 = \theta_1$ is formed between the optical axis L1 of the light beam having entered the transport path 11 and the direction L10 perpendicular to the transport path 11.

The surface of the light-guiding unit 380 on the transport path 11 side is parallel to the transport path 11. Thus, the light beam having entered the transport path 11 propagates in the transport path 11 and enters the light guide 381 at an incident angle $\theta_4 = \theta_1$ and a refraction angle $\theta_5$ relative to the interface between the transport path 11 and the light guide 381 in contact with the transport path 11. The light beam having entered the light guide 381 is reflected on the interface 41 of the S-wave-extracting unit 40 provided to allow the incident angle $\theta$ to be substantially equal to Brewster's angle $\alpha$. Almost the entire P-wave component travels into the air outside the light-guiding unit 380, while the S-wave component propagates in the light guide 382 again toward the transport path 11. The surface of the light-guiding unit 380 on the transport path 11 side is also parallel to the transport path 11. Thus, the S-wave component reflected on the interface 41 enters the transport path 11 at an incident angle $\theta_6$ and a refraction angle $\theta_7 = \theta_1$ relative to the interface between the light guide 382 and the transport path 11 in contact with the light guide 382. In other words, in the transport path 11, the angle $\theta_7 = \theta_1$ is also formed between the optical axis L1 of the light beam travelling from the interface 41 to the transport path 11 and the direction L10 perpendicular to the transport path 11. The surface of the light-guiding unit 370 on the transport path 11 side is parallel to the transport path 11. Thus, the light beam having entered the transport path 11 propagates in the transport path 11 and enters the light-guiding unit 370 at an incident angle $\theta_8 = \theta_1$ and a refraction angle $\theta_9$ relative to the interface between the transport path 11 and the light-guiding unit 370 in contact with the transport path 11. The light beam having entered the light-guiding unit 370 finally enters the light-receiving unit 30.

Each of the angles $\theta_1$ to $\theta_9$ is an acute angle formed by the optical axis L1 of a light beam with the direction L10 perpendicular to the transport path 11. The refractive indexes of the light-guiding units 360, 370, and 380 are greater than the refractive index of the air. Thus, the angles $\theta_2$, $\theta_5$, $\theta_6$, and $\theta_9$ formed by the optical axis L1 in the light-guiding units 360, 370, and 380 with the direction L10 perpendicular to the transport path 11 are respectively less than the angles $\theta_3$, $\theta_4$, $\theta_7$, and $\theta_8$ formed by the optical axis L1 in the transport path 11 (air) with the direction L10 perpendicular to the transport path 11.

When a sheet 1 is absent on the optical axis L1 of the light beam emitted from the light-emitting unit 20, i.e., on a first medium-detecting position P1 and a second medium-detecting position P2 in the transport path 11, the light beam passes through the transport path 11 and is received by the light-receiving unit 30 without attenuation by the sheet 1. The first medium-detecting position P1 is present between the light-emitting unit 20 and the S-wave-extracting unit 40, while the second medium-detecting position P2 is present between the light-receiving unit 30 and the S-wave-extracting unit 40.

When a transparent portion 2 of a sheet 1 is present on the optical axis L1 of the light beam emitted from the light-emitting unit 20, i.e., on at least one selected from the first medium-detecting position P1 and the second medium-detecting position P2, the light beam emitted so as to be at an angle $\theta_1$ of greater than or equal to 60° and less than 90° obliquely crosses the sheet 1. This increases the reflectivity on the surfaces of the transparent portion 2 when the light beam enters the transparent portion 2 and exits from the transparent portion 2 and thus reduces the transmitted light, thereby reducing the apparent transmittance of the transparent portion 2. The S-wave-extracting unit 40 separates the S-wave component from the light beam including the S-wave component and the P-wave component. The light-receiving unit 30 receives the S-wave component separated by the S-wave-extracting unit 40. This can further increase the attenuated amount and attenuation percentage of the light beam passing through the transparent portion 2, as in Embodiment 1. As a result, the difference in amount of light received by the light-receiving unit 30 can be increased between the transparent portion 2 of the sheet 1 and a portion where the sheet 1 itself is absent, which can improve the ability to detect a transparent portion 2 of a sheet 1.

When an opaque portion 3 of a sheet 1 is present on the optical axis L1 of the light beam emitted from the light-emitting unit 20, i.e., on at least one selected from the first medium-detecting position P1 and the second medium-detecting position P2, at least part of the light beam is blocked by the opaque portion 3. Thus, the light beam passing through the opaque portion 3 is attenuated and this attenuated light beam is received by the light-receiving unit 30. Thus, the amount of light received by the light-receiving unit 30 is smaller in the presence of a transparent portion 2 or an opaque portion 3 of a sheet 1 on the optical axis L1 of the light beam than in the absence of a sheet 1 on the optical axis L1 of the light, and the output value, e.g., the output current, from the light-receiving element 31 is smaller in the latter case than in the former case. Accordingly, the detecting unit can detect the sheet 1 based on the amount of light received by the light-receiving element 31, i.e., based on the output signal from the light-receiving element 31.

In the present embodiment, the sheet passage detection device 10 performs the aforementioned light emission and light reception to detect the presence or absence of the sheet 1 under transport in the transport path 11. In other words, when the sheet 1 is transported and passes at least one selected from the first medium-detecting position P1 positioned between the light-emitting unit 20 and the S-wave-extracting unit 40 and the second medium-detecting position P2 positioned between the light-receiving unit 30 and the S-wave-extracting unit 40, the amount of light received by the light-receiving unit 30 (amount of received light) changes. Determining this change in amount of light received by the light-receiving unit 30 enables detection of the presence or absence of the sheet 1. As described above, in the present embodiment, the presence of the light-emitting unit 20 and the light-receiving unit 30 on a first side of the transport path 11, the presence of the S-wave-extracting unit 40 on a second side of the transport path 11, and reflecting the S-wave component included in the light beam emitted from the light-emitting unit 20 toward the first side of the transport path 11 enable detection of the sheet 1 at the two medium-detecting positions P1 and P2 using a pair of the light-emitting unit 20 and the light-receiving unit 30, thereby reducing the number of sensors used, providing a simple, inexpensive structure of the device, and enabling detection of the sheet 1 including a transparent portion 2 at multiple positions in the transport path 11. The reduction in the number of sensors used allows the sheet passage detection device 10 to have a structure with a high degree of freedom in terms of mechanics.

(Embodiment 4)

In the present embodiment, the features unique to the present embodiment are mainly described and the same contents as in Embodiment 1 are not repeated. The components having the same or similar function in the present embodiment and Embodiment 1 are provided with the same reference signs and the description of these components is not repeated in the present embodiment. The present embodiment is substantially the same as Embodiment 1, except that a polarizing film is used as the S-wave-extracting unit.

As illustrated in Fig. 11, in the present embodiment, the sheet passage detection device (medium passage detection device) 10 includes a light-guiding unit 470 provided between the transport path 11 and the light-receiving unit 30, and the S-wave-extracting unit 40 is provided between the light-guiding unit 470 and the light-receiving unit 30.

The light-guiding unit 470 has a function of guiding the light beam incident from the transport path 11 toward the S-wave-extracting unit 40 and the light-receiving unit 30. The light-guiding unit 470 includes a cylindrical or prismatic light-guiding unit provided obliquely toward the light-emitting unit 20 relative to the direction L10 perpendicular to the transport path 11. A first end surface of the light-guiding unit 470 is a plane perpendicular to the long-edge direction of the light-guiding unit 470 and is in contact with the S-wave-extracting unit 40. A second end surface is a plane and provided parallel to the transport path 11. In other words, the second end surface (the end surface on the transport path 11 side) of the light-guiding unit 470 is a plane parallel to the transport path 11, giving a shape such that a cylindrical or prismatic light-guiding unit is cut obliquely.

In the present embodiment, the S-wave-extracting unit 40 includes a polarizing film 42. Thus, when the light beam emitted from the light-emitting unit 20, i.e., the light beam including the S-wave component and the P-wave component emitted from the light-emitting unit 20 passes through the polarizing film 42, the P-wave component is absorbed by or reflected on the polarizing film 42, while only the S-wave component is separated and extracted. Finally, a light beam consisting substantially only of the S-wave component is received by the light-receiving unit 30. Accordingly, in the present embodiment, as in Embodiment 1, the difference in amount of light received by the light-receiving unit 30 can be increased between the transparent portion 2 of the sheet 1 and a portion where the sheet 1 itself is absent, which can improve the ability to detect a transparent portion 2 of a sheet 1.

(Embodiment 5)

In the present embodiment, the features unique to the present embodiment are mainly described and the same contents as in Embodiment 1 are not repeated. The components having the same or similar function in the present embodiment and Embodiment 1 are provided with the same reference signs and the description of these components is not repeated in the present embodiment. The present embodiment is substantially the same as Embodiment 1, except that a polarizing beam splitter is used as the S-wave-extracting unit.

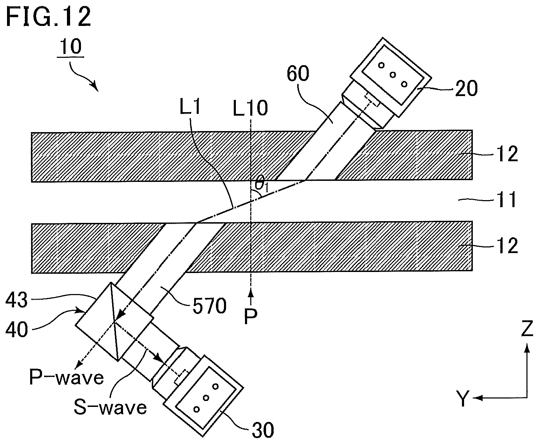

As illustrated in Fig. 12, in the present embodiment, the sheet passage detection device (medium passage detection device) 10 includes a light-guiding unit 570 provided between the transport path 11 and the S-wave-extracting unit 40. The light-receiving unit 30 is provided in contact with the S-wave-extracting unit 40.

The light-guiding unit 570 has a function of guiding the light beam incident from the transport path 11 toward the S-wave-extracting unit 40. The light-guiding unit 570 includes a cylindrical or prismatic light-guiding unit provided obliquely toward the light-emitting unit 20 relative to the direction L10 perpendicular to the transport path 11. A first end surface of the light-guiding unit 570 is a plane perpendicular to the long-edge direction of the light-guiding unit 570 and is in contact with the S-wave-extracting unit 40. A second end surface is a plane and provided parallel to the transport path 11. In other words, the second end surface (the end surface on the transport path 11 side) of the light-guiding unit 570 is a plane parallel to the transport path 11, giving a shape such that a cylindrical or prismatic light-guiding unit is cut obliquely.

In the present embodiment, the S-wave-extracting unit 40 includes a polarizing beam splitter 43. Thus, when the light beam emitted from the light-emitting unit 20, i.e., the light beam including the S-wave component and the P-wave component emitted from the light-emitting unit 20 enters the polarizing beam splitter 43, the P-wave component passes through the polarizing beam splitter 43, while the S-wave component is reflected on the polarizing beam splitter 43 at, for example, a reflection angle of 45° to be separated and extracted. Finally, a light beam consisting substantially only of the S-wave component is received by the light-receiving unit 30. Accordingly, also in the present embodiment, as in Embodiment 1, the difference in amount of light received by the light-receiving unit 30 can be increased between the transparent portion 2 of the sheet 1 and a portion where the sheet 1 itself is absent, which can improve the ability to detect a transparent portion 2 of a sheet 1.

(Embodiment 6)

In the present embodiment, the features unique to the present embodiment are mainly described and the same contents as in Embodiment 1 are not repeated. The components having the same or similar function in the present embodiment and Embodiment 1 are provided with the same reference signs and the description of these components is not repeated in the present embodiment. The present embodiment is substantially the same as Embodiment 1, except for the features described below.

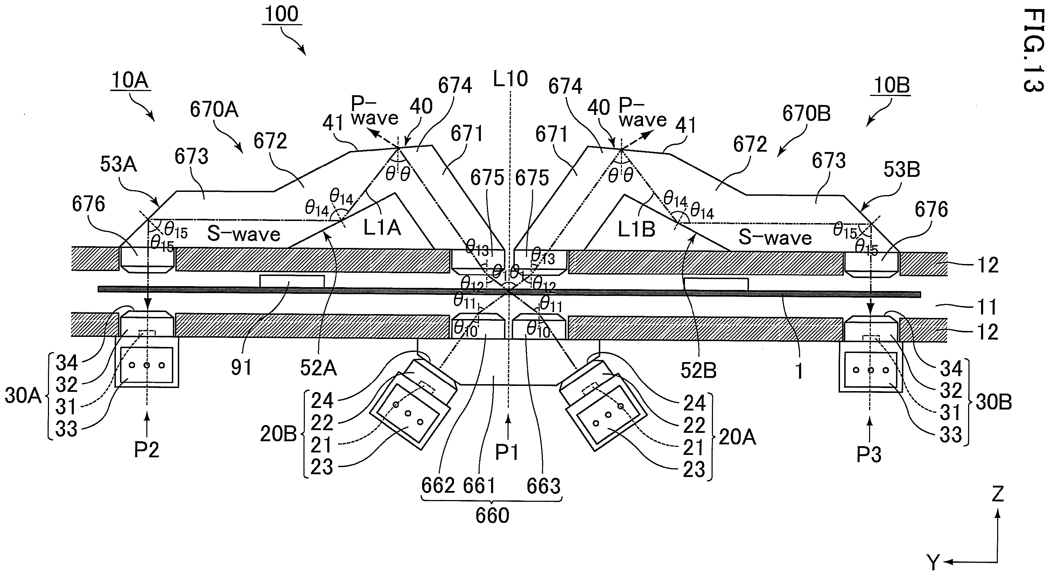

As illustrated in Fig. 13, in the present embodiment, a pair of sheet passage detection devices (a pair of medium passage detection devices) 100 including two sheet passage detection devices 10A and 10B is described.

The sheet passage detection devices 10A and 10B respectively include light-emitting units 20A and 20B provided below the transport path 11. The sheet passage detection devices 10A and 10B are provided to allow two respective optical axes L1A and L1B of the light beams emitted from the two respective light-emitting units 20A and 20B to cross each other at opposite angles in the transport path 11. This enables determination of a single medium-detecting position P1 by the two sheet passage detection devices 10A and 10B. In other words, the presence or absence of a sheet 1 can be determined by the two optical axes L1A and L1B for one medium-detecting position. Specifically, when at least one selected from the two sheet passage detection devices 10A and 10B (two detecting units) provides a detection result exhibiting the presence of the sheet 1, the sheet 1 is determined to be present. When both of them exhibit the absence of the sheet 1, the sheet 1 is determined to be absent. This resultantly enables determination of the presence or absence of the sheet 1 based on the result that exhibits a greater attenuated amount or attenuation percentage by monitoring the two optical axes L1A and L1B even when the sheet 1 is transported in a skewed state due to folding, for example. Accordingly, the ability to detect a sheet 1 can be further improved.

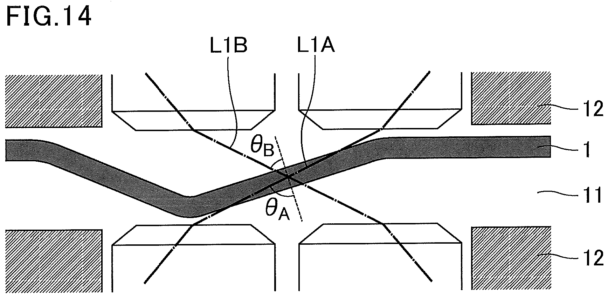

For example, when a sheet 1 is transported in a folded state as illustrated in Fig. 14, the light beam including the optical axis L1A is incident on the sheet 1 at a greater angle $\theta_A$ on the medium-detecting position P1. This increases the reflectivity on the surfaces of a transparent portion 2 when the light beam enters the transparent portion 2 and exits from the transparent portion 2 and thus reduces the transmitted light, thereby increasing the attenuated amount of the transmittance by the transparent portion 2. The light beam including the optical axis L1B enters the sheet 1 at a smaller angle $\theta_B$. This does not greatly increase the reflectivity of the transparent portion 2 and the attenuated amount of the transmittance is small. Thus, the presence of the sheet 1 can be determined based on the result from the sheet passage detection device 10A exhibiting a greater attenuated amount of the transmittance among the two sheet passage detection devices 10A and 10B. Therefore, the pair of sheet passage detection devices 100 in the present embodiment is less likely to be influenced by the state of the sheet 1 under transport and has an excellent detecting ability.

The sheet passage detection device 10A includes the light-emitting unit 20A and a light-receiving unit 30A on the same side of the transport path 11, and the sheet passage detection device 10B includes the light-emitting unit 20B and a light-receiving unit 30B on the same side of the transport path 11. This allows the optical axis L1A of the light beam emitted from the light-emitting unit 20A to pass through the transport path 11 at different two positions and also allows the optical axis L1B of the light beam emitted from the light-emitting unit 20B to pass through the transport path 11 at different two positions. In other words, each of the sheet passage detection devices 10A and 10B enables detection of the sheet 1 at two medium-detecting positions. This enables reduction in the number of sensors used, providing a simple, inexpensive structure of the device, and enabling detection of the sheet 1 including a transparent portion 2 at multiple positions in the transport path 11. The reduction in the number of sensors used allows the pair of sheet passage detection devices 100 to have a structure with a high degree of freedom in terms of mechanics.

Specifically, the number of positions through which the two optical axes L1A and L1B pass in the transport path 11 is three (first medium-detecting position P1, second medium-detecting position P2, and third medium-detecting position P3), and the two optical axes L1A and L1B cross each other at one (first medium-detecting position P1) of the three positions.

The pair of medium passage detection devices 100 includes, in the optical path of the light beam emitted from the light-emitting unit 20A, two totally reflecting units 52A and 53A each of which totally reflects the light beam and, in the optical path of the light beam emitted from the light-emitting unit 20B, two totally reflecting units 52B and 53B each of which totally reflects the light beam. This can reduce the space occupied by the pair of medium passage detection devices 100 in the height direction, enabling space saving of the pair of medium passage detection devices 100.

The sheet passage detection devices 10A and 10B are described in more detail below.

The sheet passage detection device 10A includes the light-emitting unit 20A and the light-receiving unit 30A provided below the transport path 11 and the S-wave-extracting unit 40 and a light-guiding unit 670A provided above the transport path 11. The sheet passage detection device 10B includes the light-emitting unit 20B and the light-receiving unit 30B provided below the transport path 11 and the S-wave-extracting unit 40 and a light-guiding unit 670B provided above the transport path 11. The sheet passage detection devices 10A and 10B include a light-guiding unit 660 that is a component shared by the sheet passage detection devices 10A and 10B. The light-guiding unit 660 is provided between the transport path 11 and the light-emitting units 20A and 20B. The transport path 11 is provided with a plurality of transport belts 91 as a transport device. In Fig. 13, a sheet 1 is to be transported into or out of the paper in the sheet handling device. The positions of the light-emitting unit 20A and the light-receiving unit 30A may be changed with each other. Also, the positions of the light-emitting unit 20B and the light-receiving unit 30B may be changed with each other.

The light-guiding unit 660 has a function of guiding the light beams emitted from the light-emitting units 20A and 20B toward the transport path 11. The light-guiding unit 660 includes a light guide 661 having a shape such that a quadrangular prismatic light-guiding unit is cut obliquely at both end surfaces, and two protrusions 662 and 663 each protruding from the side surface of the light guide 661 on the transport path 11 side toward the transport path 11. The side surface of the light guide 661 on the transport path 11 side is a plane parallel to the transport path 11. Both end surfaces of the light guide 661 are each a plane obliquely facing the direction L10 perpendicular to the transport path 11 and respectively in contact with the light-emitting units 20A and 20B. The end surfaces of the protrusions 662 and 663 are planes and are provided parallel to the transport path 11.

The light-guiding unit 670A has a function of guiding the light beam having entered from the transport path 11 toward the S-wave-extracting unit 40 and has a function of guiding the light beam reflected on the S-wave-extracting unit 40 toward the transport path 11.

The light-guiding unit 670A has a connected structure including, in the stated order, a quadrangular prismatic light guide 671 provided obliquely toward the light-receiving unit 30 relative to the direction L10 perpendicular to the transport path 11, a quadrangular prismatic light guide 672 provided obliquely toward the light-emitting unit 20 relative to the direction L10 perpendicular to the transport path 11, and a quadrangular prismatic light guide 673 provided parallel to the transport path 11. The end surface of the light guide 671 on the transport path 11 side is a plane parallel to the transport path 11, and the light guide 671 has a shape such that a quadrangular prismatic light-guiding unit is cut obliquely. The surface of the V-shaped connection 674 of the light-guiding unit 670A opposite to the transport path 11 is positioned outside the transport guide 12 and is in contact with the air. The end surface of the light guide 673 opposite to the light guide 672 is a plane obliquely facing the direction L10 perpendicular to the transport path 11, and the light guide 673 has a shape such that a quadrangular prismatic light-guiding unit is obliquely cut. The light-guiding unit 670A includes a protrusion 675 that protrudes from the end of the light guide 671 on the transport path 11 side toward the transport path 11 and a protrusion 676 that protrudes from the end of the light guide 673 opposite to the light guide 672 toward the transport path 11. The end surfaces of the protrusions 675 and 676 are planes and are provided parallel to the transport path 11.

The light-guiding unit 670B is a light-guiding unit having the same shape as the light-guiding unit 670A and, similar to the light-guiding unit 670A, includes the light guides 671 to 673, the connection 674, and the protrusions 675 and 676. The light-guiding units 670A and 670B are arranged to be symmetric about the center (the same position as the first medium-detecting position P1) of the transport path 11. The two protrusions 675 of the light-guiding units 670A and 670B respectively face the protrusions 662 and 663 of the light-guiding unit 660 with the transport path 11 in between. The two protrusions 676 of the light-guiding units 670A and 670B respectively face the light-receiving units 30A and 30B with the transport path 11 in between.

The light-guiding units 660, 670A, and 670B are each formed from a transparent material. Specific examples of the transparent material include acrylic resin and glass.

The light beam emitted from the light-emitting unit 20A reaches the transport path 11 through the light-guiding unit 660, obliquely crosses the transport path 11 so as to be away from the light-emitting unit 20A, and enters the light guide 671 of the light-guiding unit 670A through the protrusion 675. The light beam having entered the light-guiding unit 670A is reflected on the S-wave-extracting unit 40 and totally reflected on the totally reflecting unit 52A provided on the side surface of the light guide 672 of the light-guiding unit 670A on the transport path 11 side. The totally reflecting unit 52A is a plane and the orientation thereof is adjusted so as to totally reflect the light beam from the S-wave-extracting unit 40. The light beam totally reflected on the totally reflecting unit 52A of the light guide 672 reaches an end surface of the light guide 673, and is totally reflected on the totally reflecting unit 53A provided on the end surface. The totally reflecting unit 53A is a plane and the orientation thereof is adjusted so as to totally reflect the light beam from the totally reflecting unit 52A of the light guide 672. The light beam totally reflected on the totally reflecting unit 53A of the light guide 673 reaches the transport path 11 through the protrusion 676. The light beam having reached the transport path 11 perpendicularly crosses the transport path 11 and enters the light-receiving unit 30A.

The term "perpendicular" as used herein encompasses not only the complete perpendicularity but also substantial perpendicularity within the scope where the effects of the invention are achieved.

Similar to the light beam emitted from the light-emitting unit 20A, the light beam emitted from the light-emitting unit 20B also reaches the transport path 11 through the light-guiding unit 660, obliquely crosses the transport path 11 so as to be away from the light-emitting unit 20B, and enters the light guide 671 of the light-guiding unit 670B through the protrusion 675. The light beam having entered the light-guiding unit 670B is reflected on the S-wave-extracting unit 40 and totally reflected on the totally reflecting unit 52B provided on the side surface of the light guide 672 of the light-guiding unit 670B on the transport path 11 side. The totally reflecting unit 52B is a plane and the orientation thereof is adjusted so as to totally reflect the light beam from the S-wave-extracting unit 40. The light beam totally reflected on the totally reflecting unit 52B of the light guide 672 reaches an end surface of the light guide 673 and is totally reflected on the totally reflecting unit 53B provided on the end surface. The totally reflecting unit 53B is a plane and the orientation thereof is adjusted so as to totally reflect the light beam from the totally reflecting unit 52A of the light guide 672. The light beam totally reflected on the totally reflecting unit 53B of the light guide 673 reaches the transport path 11 through the protrusion 676. The light beam having reached the transport path 11 perpendicularly crosses the transport path 11 and enters the light-receiving unit 30B.

Each S-wave-extracting unit 40 includes the interface 41 between the air and the light-guiding unit 670A or 670B including different refractive indexes. The interface 41 corresponds to the surface of the connection 674 of the light-guiding unit 670A or 670B, and the interface 41 is a plane and is in contact with the air. The interface 41 is provided to allow the incident angle $\theta$ of the light beam emitted from the light-emitting unit 20A or 20B to be substantially equal to Brewster's angle $\alpha$. Thus, when the light beam including the S-wave component and the P-wave component emitted from each of the light-emitting units 20A and 20B is incident on the interface 41, the light beam is reflected and refracted on the interface 41. The light beam reflected on the interface 41 consists substantially only of the S-wave component.

Next, the operation in the present embodiment is described. As illustrated in Fig. 13, the light-emitting unit 20A emits a light beam toward the transport path 11 so that, in the transport path 11, an angle $\theta_1$ of greater than or equal to 60° and less than 90° is formed between the optical axis L1A and the direction L10 perpendicular to the transport path 11. Specifically, the light beam emitted from the light-emitting unit 20A propagates in the light-guiding unit 660 and enters the transport path 11 at an incident angle $\theta_{10}$ and a refraction angle $\theta_{11}$ relative to the interface between the protrusion 663 of the light-guiding unit 660 and the transport path 11 in contact with the protrusion 663. The surface of the protrusion 663 on the transport path 11 side is parallel to the transport path 11. Thus, in the transport path 11, the angle $\theta_{11} = \theta_1$ is formed between the optical axis L1A of the light beam having entered the transport path 11 and the direction L10 perpendicular to the transport path 11.

The surface of the protrusion 675 of the light-guiding unit 670A on the transport path 11 side is parallel to the transport path 11. Thus, the light beam having entered the transport path 11 propagates in the transport path 11 and enters the protrusion 675 at an incident angle $\theta_{12} = \theta_1$ and a refraction angle $\theta_{13}$ relative to the interface between the transport path 11 and the protrusion 675 in contact with the transport path 11. The light beam having entered the protrusion 675 travels toward the light guide 671 while keeping the traveling direction. The light beam traveled into the light guide 671 is reflected on the interface 41 of the S-wave-extracting unit 40 provided to allow the incident angle $\theta$ to be substantially equal to Brewster's angle $\alpha$. Almost the entire P-wave component travels toward the air outside the light-guiding unit 670A, while the S-wave component travels toward the light guide 672. The S-wave component traveled into the light guide 672 is totally reflected toward the light guide 673 at incident and reflection angles $\theta_{14}$ relative to the totally reflecting unit 52A of the light guide 672. The angles $\theta_{14}$ are greater than or equal to the critical angle, and may be set to be greater than or equal to 45° and less than 90°, for example. The totally reflected S-wave component propagates in the light guide 673 in parallel to the transport path 11 and is totally reflected toward the protrusion 676 at incident and reflection angles $\theta_{15}$ relative to the totally reflecting unit 53A of the light guide 672. The angles $\theta_{15}$ are greater than or equal to the critical angle, and may be set to be greater than or equal to 45° and less than 90°, for example. The S-wave component totally reflected toward the protrusion 676 enters the transport path 11, and finally enters the light-receiving unit 30A. The surface of the protrusion 676 on the transport path 11 side is parallel to the transport path 11 and the S-wave component having entered the protrusion 676 is perpendicularly incident on the surface of the protrusion 676 on the transport path 11 side. Thus, the S-wave component having entered the transport path 11 from the protrusion 676 perpendicularly crosses the transport path 11 and enters the light-receiving unit 30.

The light beam emitted from the light-emitting unit 20B travels an optical path similar to that of the light beam emitted from the light-emitting unit 20A, and finally enters the light-receiving unit 30B as the S-wave component. The optical path of the light beam emitted from the light-emitting unit 20A and the optical path of the light beam emitted from the light-emitting unit 20B are axially symmetric about the straight line that is perpendicular to the transport path 11 and passes the first medium-detecting position P1. The optical axis L1A of the light beam emitted from the light-emitting unit 20A and the optical axis L1B of the light beam emitted from the light-emitting unit 20B cross each other at the first medium-detecting position P1. Thus, in the transport path 11, the optical axes L1A and L1B are positioned on the opposite sides relative to the straight line that is perpendicular to the transport path 11 and passes the first medium-detecting position P1, except for the position where they cross each other.

Each of the angles $\theta_1$ and $\theta_{10}$ to $\theta_{13}$ is an acute angle formed by the optical axis L1A or L1B of a light beam with the direction L10 perpendicular to the transport path 11. The refractive indexes of the light-guiding units 660, 670A, and 670B are greater than the refractive index of the air. Thus, the angles $\theta_{10}$ and $\theta_{13}$ formed by the optical axis L1A in the light-guiding units 660 and 670A with the direction L10 perpendicular to the transport path 11 are respectively less than the angles $\theta_{11}$ and $\theta_{12}$ formed by the optical axis L1A in the transport path 11 (air) with the direction L10 perpendicular to the transport path 11. Similarly, the angles $\theta_{10}$ and $\theta_{13}$ formed by the optical axis L1B in the light-guiding units 660 and 670B with the direction L10 perpendicular to the transport path 11 are respectively less than the angles $\theta_{11}$ and $\theta_{12}$ formed by the optical axis L1B in the transport path 11 (air) with the direction L10 perpendicular to the transport path 11.

When a sheet 1 is absent on the optical axes L1A and L1B of the light beams emitted from the light-emitting units 20A and 20B, i.e., on the first medium-detecting position P1, the second medium-detecting position P2, and the third medium-detecting position P3 in the transport path 11, the light beams pass through the transport path 11 and are received respectively by the light-receiving units 30A and 30B without attenuation by the sheet 1. The first medium-detecting position P1 is present between the light-emitting unit 20A and the S-wave-extracting unit 40 of the sheet passage detection device 10A and between the light-emitting unit 20B and the S-wave-extracting unit 40 of the sheet passage detection device 10B. The second medium-detecting position P2 is present between the light-receiving unit 30A and the S-wave-extracting unit 40 of the sheet passage detection device 10A. The third medium-detecting position P3 is present between the light-receiving unit 30B and the S-wave-extracting unit 40 of the sheet passage detection device 10B.

When a transparent portion 2 of a sheet 1 is present on the first medium-detecting position P1, the light beams emitted so as to be at an angle $\theta_1$ of greater than or equal to 60° and less than 90° obliquely cross the sheet 1. This increases the reflectivity on the surfaces of the transparent portion 2 when the light beams enter the transparent portion 2 and exits from the transparent portion 2 and thus reduces the transmitted light, thereby reducing the apparent transmittance of the transparent portion 2. The S-wave-extracting units 40 separate the S-wave component from the light beams including the S-wave component and the P-wave component. The light-receiving units 30A and 30B receive the S-wave component separated by the S-wave-extracting units 40. This can further increase the attenuated amount and attenuation percentage of the light beam passing through the transparent portion 2, as in Embodiment 1. As a result, the difference in amount of light received by each of the light-receiving units 30A and 30B can be increased between the transparent portion 2 of the sheet 1 and a portion where the sheet 1 itself is absent, which can improve the ability to detect a transparent portion 2 of a sheet 1.

In addition, as described above, the presence or absence of a transparent portion 2 of a sheet 1 can be determined by the two optical axes L1A and L1B on the first medium-detecting position P1. This resultantly enables determination of the presence or absence of the sheet 1 based on the result that exhibits a greater attenuated amount or attenuation percentage by monitoring the two optical axes L1A and L1B even when the sheet 1 is transported in a skewed state due to the presence of a crease, for example. Accordingly, the ability to detect a sheet 1 can be further improved.

When an opaque portion 3 of a sheet 1 is present on at least one selected from the optical axes L1A and L1B of the light beams respectively emitted from the light-emitting units 20A and 20B, i.e., on at least one selected from the first medium-detecting position P1, the second medium-detecting position P2, and the third medium-detecting position P3 in the transport path 11, at least part of the light beam(s) is blocked by the opaque portion 3. Thus, the light beam(s) passing through the opaque portion 3 is/are attenuated and the attenuated light beam(s) is/are received by the light-receiving unit(s) 30A and/or 30B. Thus, the amount(s) of light received by the light-receiving unit(s) 30A and/or 30B is/are smaller in the presence of a transparent portion 2 or an opaque portion 3 of a sheet 1 on the optical axes/axis L1 and/or L2 of the light beam(s) than in the absence of a sheet 1 on the optical axes L1 and L2 of the light beams. The output value(s), e.g., the output current(s), from the light-receiving element(s) 31 of the light-receiving unit(s) 30A and/or 30B are/is smaller in the latter case than in the former case. Accordingly, the detecting unit(s) can detect the sheet 1 based on the amount(s) of light received by the light-receiving element(s) 31 of the light-receiving unit(s) 30A and/or 30B, i.e., based on the output signal(s) from the light-receiving element(s) 31 of the light-receiving unit(s) 30A and/or 30B.

As described above, at the second medium-detecting position P2 and the third medium-detecting position P3, an opaque portion 3 of a sheet 1 can be detected without any trouble, but a transparent portion 2 cannot be easily detected because the optical axes L1 and L2 of the light beams perpendicularly cross the sheet 1. Thus, the present embodiment is suitable for detection of a sheet 1 that has a transparent portion 2 at the central portion in the long-edge direction and opaque portions 3 at the respective ends in the long-edge direction and that is under long edge feed in the transport path 11. This enables effective detection of the transparent portion 2 of the sheet 1 at the first medium-detecting position P1 and effective detection of the opaque portions 3 of the sheet 1 at the second medium-detecting position P2 and the third medium-detecting position P3.

(Embodiment 7)

In the present embodiment, the features unique to the present embodiment are mainly described and the same contents as in Embodiment 6 are not repeated. The components having the same or similar function in the present embodiment and Embodiment 6 are provided with the same reference signs and the description of these components is not repeated in the present embodiment. The present embodiment is substantially the same as Embodiment 6, except that the two light-guiding units 670A and 670B are integrated.

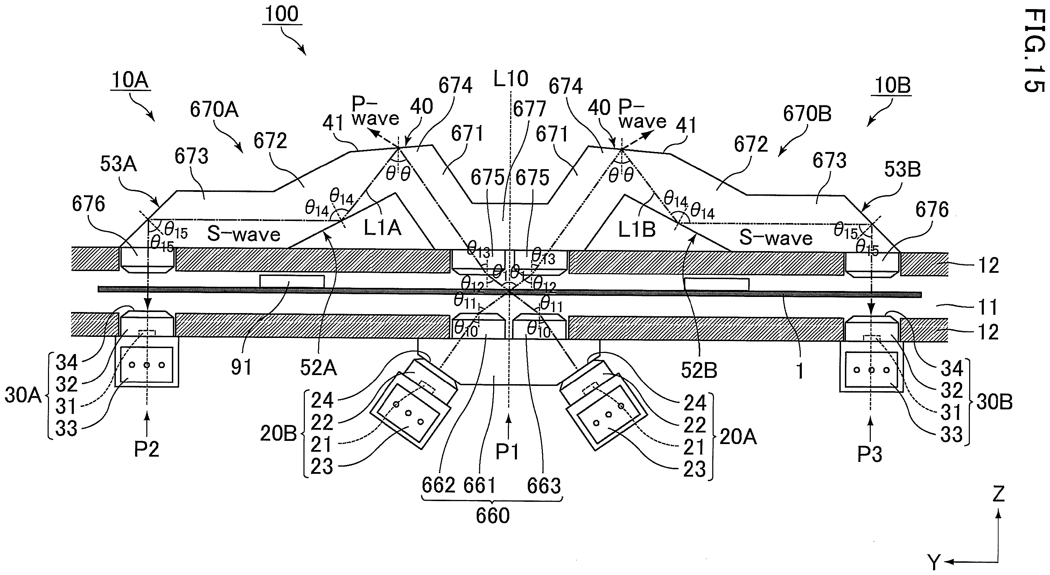

As illustrated in Fig. 15, the pair of sheet passage detection devices (the pair of medium passage detection devices) 100 in the present embodiment includes an integrated structure of the two light-guiding units 670A and 670B provided above the transport path 11. Specifically, the end of the light guide 671 of the light-guiding unit 670A on the transport path 11 side and the end of the light guide 671 of the light-guiding unit 670B on the transport path 11 side are connected at the quadrangular prismatic light guide 677 parallel to the transport path 11. This integrated light-guiding unit functions similarly to the light-guiding units 670A and 670B, and thus the same functions as in Embodiment 6 can be achieved in the present embodiment.

(Embodiment 8)

In the present embodiment, the features unique to the present embodiment are mainly described and the same contents as in Embodiment 1 are not repeated. The components having the same or similar function in the present embodiment and Embodiment 1 are provided with the same reference signs and the description of these components is not repeated in the present embodiment. The present embodiment is substantially the same as Embodiment 1, except for the features described below.

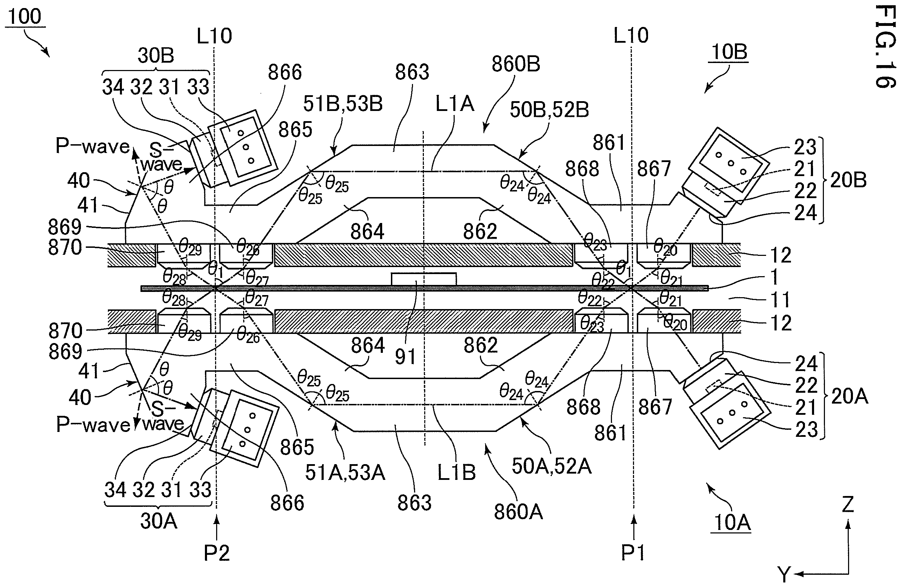

As illustrated in Fig. 16, in the present embodiment, the pair of sheet passage detection devices (the pair of medium passage detection devices) 100 including the two sheet passage detection devices 10A and 10B is described. The pair of sheet passage detection devices 100 in the present embodiment is to be mounted on a sheet handling device and utilized to detect passage of a sheet 1 under short edge feed in the transport path of the sheet handling device.

The sheet passage detection device 10A includes the light-emitting unit 20A and the light-receiving unit 30A provided below the transport path 11. The sheet passage detection device 10B includes the light-emitting unit 20B and the light-receiving unit 30B provided above the transport path 11. The sheet passage detection devices 10A and 10B are provided to allow two respective optical axes L1A and L1B of the light beams emitted from the two respective light-emitting units 20A and 20B to cross each other at opposite angles in the transport path 11. This enables determination of a single medium-detecting position P1 by the two sheet passage detection devices 10A and 10B. In other words, the presence or absence of a sheet 1 can be determined by the two optical axes L1A and L1B for one medium-detecting position. Specifically, when at least one selected from the two sheet passage detection devices 10A and 10B (two detecting units) provides a detection result exhibiting the presence of the sheet 1, the sheet 1 is determined to be present. When both of them exhibit the absence of the sheet 1, the sheet 1 is determined to be absent. This resultantly enables determination of the presence or absence of the sheet 1 based on the result that exhibits a greater attenuated amount or attenuation percentage by monitoring the two optical axes L11A and L11B even when the sheet 1 is transported in a skewed state due to folding, for example. Accordingly, the ability to detect a sheet 1 can be further improved.

Similar to the case of Embodiment 6 described with reference to Fig. 14, the presence of the sheet 1 can be determined based on the result from the sheet passage detection device exhibiting a greater attenuated amount of the transmittance among the two sheet passage detection devices 10A and 10B. Therefore, the pair of sheet passage detection devices 100 in the present embodiment is less likely to be influenced by the state of the sheet 1 under transport and has an excellent detecting ability.

The sheet passage detection device 10A includes the light-emitting unit 20A and the light-receiving unit 30A on the same side of the transport path 11, and the sheet passage detection device 10B includes the light-emitting unit 20B and the light-receiving unit 30B on the same side of the transport path 11. This allows the optical axis L1A of the light beam emitted from the light-emitting unit 20A to pass through the transport path 11 at different two positions and also allows the optical axis L1B of the light beam emitted from the light-emitting unit 20B to pass through the transport path 11 at different two positions. In other words, each of the sheet passage detection devices 10A and 10B enables detection of the sheet 1 at two medium-detecting positions. This enables reduction in the number of sensors used, providing a simple, inexpensive structure of the device, and enabling detection of the sheet 1 including a transparent portion 2 at multiple positions in the transport path 11. The reduction in the number of sensors used allows the pair of sheet passage detection devices 100 to have a structure with a high degree of freedom in terms of mechanics.

Specifically, the number of positions through which the two optical axes L1A and L1B pass in the transport path 11 is two (first medium-detecting position P1 and second medium-detecting position P2), and the two optical axes L1A and L1B cross each other at each of the two positions.

The medium passage detection device 10A includes reflecting units 50A and 51A that reflect the light beam emitted from the light-emitting unit 20B of the other medium passage detection device 10B. The medium passage detection device 10B includes reflecting units 50B and 51B that reflect the light beam emitted from the light-emitting unit 20A of the other medium passage detection device 10A.

The pair of medium passage detection devices 100 includes, in the optical path of the light beam emitted from the light-emitting unit 20A, two totally reflecting units 52B and 53B each of which totally reflects the light beam and, in the optical path of the light beam emitted from the light-emitting unit 20B, two totally reflecting units 52A and 53A each of which totally reflects the light beam. This can reduce the space occupied by the pair of medium passage detection devices 100 in the height direction, enabling space saving of the pair of medium passage detection devices 100. In the present embodiment, the reflecting units 50A and 51A correspond respectively to the totally reflecting units 52A and 53A and the reflecting units 50B and 51B correspond respectively to the totally reflecting units 52B and 53B.

The sheet passage detection devices 10A and 10B are described in more detail below.

The sheet passage detection devices 10A and 10B have the same structure. This enables standardization of components between the sheet passage detection devices 10A and 10B, reducing the cost of the pair of medium passage detection devices 100.

Specifically, the sheet passage detection device 10A includes the light-emitting unit 20A, a light-guiding unit 860A, the S-wave-extracting unit 40, and the light-receiving unit 30A provided below the transport path 11. The sheet passage detection device 110B includes the light-emitting unit 20B, a light-guiding unit 860B, the S-wave-extracting unit 40, and the light-receiving unit 30B provided above the transport path 11. The transport path 11 is provided with a single transport belt 91 as a transport device. In Fig. 16, a sheet 1 is to be transported into or out of the paper in the sheet handling device. The positions of the light-emitting unit 20A and the light-receiving unit 30A may be changed with each other. Also, the positions of the light-emitting unit 20B and the light-receiving unit 30B may be changed with each other.

The light-guiding unit 860A has a function of guiding the light beam emitted from the light-emitting unit 20B toward the light-receiving unit 30B, a function of guiding the light beam emitted from the light-emitting unit 20A toward the transport path 11, and a function of guiding the light beam incident from the transport path 11 toward the S-wave-extracting unit 40 and the light-receiving unit 30A. The light-guiding unit 860B has a function of guiding the light beam emitted from the light-emitting unit 20A toward the light-receiving unit 30A, a function of guiding the light beam emitted from the light-emitting unit 20B toward the transport path 11, and a function of guiding the light beam incident from the transport path 11 toward the S-wave-extracting unit 40 and the light-receiving unit 30B.

The light-guiding unit 860A has a connected structure including, in the stated order, a quadrangular prismatic light guide 861 provided parallel to the transport path 11, a quadrangular prismatic light guide 862 provided obliquely toward the light-receiving unit 20A relative to the direction L10 perpendicular to the transport path 11, a quadrangular prismatic light guide 863 provided parallel to the transport path 11, a quadrangular prismatic light guide 864 provided obliquely toward the light-emitting unit 20A relative to the direction L10 perpendicular to the transport path 11, a quadrangular prismatic light guide 865 provided parallel to the transport path 11, and a protrusion 866 that protrudes in the direction L10 perpendicular to the transport path 11. The end surface of the light guide 861 opposite to the light guide 862 is a plane obliquely facing the direction L10 perpendicular to the transport path 11, and the light guide 861 has a shape such that a quadrangular prismatic light-guiding unit is obliquely cut. This oblique end surface is in contact with the light-emitting unit 20A. A surface of the protrusion 866 is positioned outside the transport guide 12 and is in contact with the air. A surface of the protrusion 866 is a plane obliquely facing the direction L10 perpendicular to the transport path 11 and is in contact with the light-receiving unit 20A. The side surfaces of the light guides 861 and 865 on the transport path 11 side are each a plane parallel to the transport path 11. The light-guiding unit 860A includes two protrusions 867 and 868 that protrude from the side surface of the light guide 861 on the transport path 11 side toward the transport path 11 and two protrusions 869 and 870 that protrude from the side surface of the light guide 865 on the transport path 11 side toward the transport path 11. The end surfaces of the protrusions 867, 868, 869, and 870 are planes and are provided parallel to the transport path 11.

The light-guiding unit 860B is a light-guiding unit having the same shape as the light-guiding unit 860A and, similar to the light-guiding unit 860A, includes the light guides 861 to 865 and the protrusions 866 to 870. The light-guiding units 860A and 860B are arranged to be symmetric about the transport path 11. The protrusions 867 and 868 of the light-guiding unit 860A respectively face the protrusions 867 and 868 of the light-guiding unit 860B with the transport path 11 in between. The protrusions 869 and 870 of the light-guiding unit 860A respectively face the protrusions 869 and 870 of the light-guiding unit 860B with the transport path 11 in between.

The light-guiding units 860A and 860B are each formed from a transparent material. Specific examples of the transparent material include acrylic resin and glass.

The light beam emitted from the light-emitting unit 20A reaches the transport path 11 through the light guide 861 and the protrusion 867 of the light-guiding unit 860A, obliquely crosses the transport path 11 so as to be away from the light-emitting unit 20A, and enters the light guide 862 of the light-guiding unit 860B through the protrusion 868 of the light-guiding unit 860B. The light beam having entered the light-guiding unit 860B is totally reflected on the totally reflecting unit 52B provided on the side surface of the light guide 862 opposite to the transport path 11. The totally reflecting unit 52B is a plane and the orientation thereof is adjusted so as to totally reflect the light beam from the protrusion 868. The light beam totally reflected on the totally reflecting unit 52B of the light guide 672 reaches the light guide 864 of the light-guiding unit 860B through the light guide 863 of the light-guiding unit 860B, and is totally reflected on the totally reflecting unit 53B provided on the side surface of the light guide 864 opposite to the transport path 11. The totally reflecting unit 53B is a plane and the orientation thereof is adjusted so as to totally reflect the light beam from the totally reflecting unit 52B of the light guide 862. The light beam totally reflected on the totally reflecting unit 53B of the light guide 864 reaches the transport path 11 through the protrusion 869 of the light-guiding unit 860B. The light beam having reached the transport path 11 obliquely crosses the transport path 11 so as to be away from the light-emitting unit 20A, and enters the light guide 865 of the light-guiding unit 860A through the protrusion 870 of the light-guiding unit 860A. The light beam having entered the light-guiding unit 865 is reflected on the S-wave-extracting unit 40, and enters the light-receiving unit 30A.

Similar to the light beam emitted from the light-emitting unit 20A, the light beam emitted from the light-emitting unit 20B reaches the transport path 11 through the light guide 861 and the protrusion 867 of the light-guiding unit 860B, obliquely crosses the transport path 11 so as to be away from the light-emitting unit 20B, and enters the light guide 862 of the light-guiding unit 860A through the protrusion 868 of the light-guiding unit 860A. The light beam having entered the light-guiding unit 860A is totally reflected on the totally reflecting unit 52A provided on the side surface of the light guide 862 opposite to the transport path 11. The totally reflecting unit 52A is a plane and the orientation thereof is adjusted so as to totally reflect the light beam from the protrusion 868. The light beam totally reflected on the totally reflecting unit 52A of the light guide 672 reaches the light guide 864 of the light-guiding unit 860A through the light guide 863 of the light-guiding unit 860A, and is totally reflected on the totally reflecting unit 53A provided on the side surface of the light guide 864 opposite to the transport path 11. The totally reflecting unit 53A is a plane and the orientation thereof is adjusted so as to totally reflect the light beam from the totally reflecting unit 52A of the light guide 862. The light beam totally reflected on the totally reflecting unit 53A of the light guide 864 reaches the transport path 11 through the protrusion 869 of the light-guiding unit 860A. The light beam having reached the transport path 11 obliquely crosses the transport path 11 so as to be away from the light-emitting unit 20B, and enters the light guide 865 of the light-guiding unit 860B through the protrusion 870 of the light-guiding unit 860B. The light beam having entered the light-guiding unit 865 is reflected on the S-wave-extracting unit 40, and enters the light-receiving unit 30B.

Each S-wave-extracting unit 40 includes the interface 41 between the air and the light-guiding unit 860A or 860B including different refractive indexes. The interface 41 corresponds to the surface of the protrusion 866 of the light-guiding unit 860A or 860B, and the interface 41 is a plane and is in contact with the air. The interface 41 is provided to allow the incident angle $\theta$ of the light beam emitted from the light-emitting unit 20A or 20B to be substantially equal to Brewster's angle $\alpha$. Thus, when the light beam including the S-wave component and the P-wave component emitted from each of the light-emitting units 20A and 20B is incident on the interface 41, the light beam is reflected and refracted on the interface 41. The light beam reflected on the interface 41 consists substantially only of the S-wave component.

Next, the operation in the present embodiment is described. As illustrated in Fig. 16, the light-emitting unit 20A emits a light beam toward the transport path 11 so that, in the transport path 11, an angle $\theta_1$ of greater than or equal to 60° and less than 90° is formed between the optical axis L1A and the direction L10 perpendicular to the transport path 11. Specifically, the light beam emitted from the light-emitting unit 20A propagates in the light-guiding unit 860A and enters the transport path 11 at an incident angle $\theta_{20}$ and a refraction angle $\theta_{21}$ relative to the interface between the protrusion 867 of the light-guiding unit 860A and the transport path 11 in contact with the protrusion 867. The surface of the protrusion 867 on the transport path 11 side is parallel to the transport path 11. Thus, in the transport path 11, the angle $\theta_{21} = \theta_1$ is formed between the optical axis L1A of the light beam having entered the transport path 11 and the direction L10 perpendicular to the transport path 11.

The surface of the protrusion 868 of the light-guiding unit 860B on the transport path 11 side is parallel to the transport path 11. Thus, the light beam having entered the transport path 11 propagates in the transport path 11 and enters the protrusion 868 at an incident angle $\theta_{22} = \theta_1$ and a refraction angle $\theta_{23}$ with the interface between the transport path 11 and the protrusion 868 in contact with the transport path 11. The light beam having entered the protrusion 868 travels toward the light guide 862 while keeping the traveling direction. The light beam traveled into the light guide 862 is totally reflected toward the light guide 863 at an incident and reflection angles $\theta_{24}$ relative to the totally reflecting unit 52B of the light guide 862. The angles $\theta_{24}$ are greater than or equal to the critical angle, and may be set to be greater than or equal to 45° and less than 90°, for example. The totally reflected light beam propagates in the light guide 863 in parallel to the transport path 11 and travels toward the light guide 864. The light beam traveled into the light guide 864 is totally reflected toward the protrusion 869 at incident and reflection angles $\theta_{25}$ relative to the totally reflecting unit 53B of the light guide 864. The angles $\theta_{25}$ are greater than or equal to the critical angle, and may be set to be greater than or equal to 45° and less than 90°, for example. The light beam totally reflected toward the protrusion 869 enters the transport path 11 at an incident angle $\theta_{26}$ and a refraction angle $\theta_{27}$ relative to the interface between the protrusion 869 of the light-guiding unit 860B and the transport path 11 in contact with the protrusion 869. The surface of the protrusion 869 on the transport path 11 side is parallel to the transport path 11. Thus, in the transport path 11, the angle $\theta_{27} = \theta_1$

is formed between the optical axis L1A of the light beam having entered the transport path 11 and the direction L10 perpendicular to the transport path 11. The surface of the protrusion 870 of the light-guiding unit 860A on the transport path 11 side is parallel to the transport path 11. Thus, the light beam having entered the transport path 11 propagates in the transport path 11, and enters the protrusion 870 at an incident angle $\theta_{28} = \theta_1$ and a refraction angle $\theta_{29}$ relative to the interface between the transport path 11 and the protrusion 870 in contact with the transport path 11. The light beam having entered the protrusion 870 travels toward successively the light guide 865 and protrusion 866 of the light-guiding unit 860A. The light beam traveled into the protrusion 866 is reflected on the interface 41 of the S-wave-extracting unit 40 provided to allow the incident angle $\theta$ to be substantially equal to Brewster's angle $\alpha$. Almost the entire P-wave component travels toward the air outside the light-guiding unit 680A, while the S-wave component enters the light-receiving unit 30A.

The light beam emitted from the light-emitting unit 20B travels an optical path similar to that of the light beam emitted from the light-emitting unit 20A, and finally enters the light-receiving unit 30B as the S-wave component. The optical path of the light beam emitted from the light-emitting unit 20A and the optical path of the light beam emitted from the light-emitting unit 20B are axially symmetric about the straight line that is parallel to the transport path 11 and passes the center of the transport path 11 in the height direction. The optical axis L1A of the light beam emitted from the light-emitting unit 20A and the optical axis L1B of the light beam emitted from the light-emitting unit 20B cross each other at the medium-detecting positions P1 and P2. Thus, in the transport path 11, the optical axes L1A and L1B are positioned on the opposite sides relative to each of two straight lines that are perpendicular to the transport path 11 and respectively pass the medium-detecting positions P1 and P2, except for the positions where they cross each other.

Each of the angles $\theta_1$, $\theta_{20}$ to $\theta_{23}$, and $\theta_{26}$ to $\theta_{29}$ is an acute angle formed by the optical axis L1A or L1B of a light beam with the direction L10 perpendicular to the transport path 11. The refractive indexes of the light-guiding units 860A and 860B are greater than the refractive index of the air. Thus, the angles $\theta_{20}$ and $\theta_{29}$ formed by the optical axis L1A in the light-guiding unit 860A with the direction L10 perpendicular to the transport path 11 are respectively less than the angles $\theta_{21}$ and $\theta_{28}$ formed by the optical axis L1A in the transport path 11 (air) with the direction L10 perpendicular to the transport path 11. Also, the angles $\theta_{23}$ and $\theta_{26}$ formed by the optical axis L1A in the light-guiding unit 860B and the direction L10 perpendicular to the transport path 11 are respectively less than the angles $\theta_{22}$ and $\theta_{27}$ formed by the optical axis L1A in the transport path 11 (air) and the direction L10 perpendicular to the transport path 11. Similarly, the angles $\theta_{20}$ and $\theta_{29}$ formed by the optical axis L1B in the light-guiding unit 860B with the direction L10 perpendicular to the transport path 11 are respectively less than the angles $\theta_{21}$ and $\theta_{28}$ formed by the optical axis L1B in the transport path 11 (air) with the direction L10 perpendicular to the transport path 11. The angles $\theta_{23}$ and $\theta_{26}$ formed by the optical axis L1B in the light-guiding unit 860A with the direction L10 perpendicular to the transport path 11 are respectively less than the angles $\theta_{22}$ and $\theta_{27}$ formed by the optical axis L1B in the transport path 11 (air) with the direction L10 perpendicular to the transport path 11.

When a sheet 1 is absent on the optical axes L1A and L1B of the light beams emitted from the light-emitting units 20A and 20B, i.e., on the first medium-detecting position P1 and the second medium-detecting position P2 in the transport path 11, the light beams pass through the transport path 11 and are received respectively by the light-receiving units 30A and 30B without attenuation by the sheet 1. The first medium-detecting position P1 and the second medium-detecting position P2 are each present between the light-emitting unit 20A and the S-wave-extracting unit 40 of the sheet passage detection device 10A and between the light-emitting unit 20B and the S-wave-extracting unit 40B of the sheet passage detection device 10B.

When a transparent portion 2 of a sheet 1 is present on the first medium-detecting position P1 and/or the second medium-detecting position P2, the light beams emitted so as to be at an angle $\theta_1$ of greater than or equal to 60° and less than 90° obliquely cross the sheet 1. This increases the reflectivity on the surfaces of the transparent portion 2 when the light beams enter the transparent portion 2 and exits from the transparent portion 2 and thus reduces the transmitted light, thereby reducing the apparent transmittance of the transparent portion 2. The S-wave-extracting units 40 separate the S-wave component from the light beams including the S-wave component and the P-wave component. The light-receiving units 30A and 30B receive the S-wave component separated by the S-wave-extracting units 40. This can further increase the attenuated amount and attenuation percentage of the light beam passing through the transparent portion 2, as in Embodiment 1. As a result, the difference in amount of light received by each of the light-receiving units 30A and 30B can be increased between the transparent portion 2 of the sheet 1 and a portion where the sheet 1 itself is absent, which can improve the ability to detect a transparent portion 2 of a sheet 1.

In addition, as described above, the presence or absence of a transparent portion 2 of a sheet 1 can be determined by the two optical axes L1A and L1B on each of the medium-detecting positions P1 and P2. This resultantly enables determination of the presence or absence of the sheet 1 based on the result that exhibits a greater attenuated amount or attenuation percentage by monitoring the two optical axes L1A and L1B even when the sheet 1 is transported in a skewed state due to the presence of a crease, for example. Accordingly, the ability to detect a sheet 1 can be further improved.

As described above, in the present embodiment, a transparent portion 2 of a sheet 1 can effectively be detected at each of the medium-detecting positions P1 and P2. Thus, the present embodiment is suitable for detection of a sheet 1 that has a transparent portion 2 on at least one end in the short-edge direction and that is under short edge feed in the transport path 11. This enables effective detection of the transparent portion 2 of the sheet 1 at each of the medium-detecting positions P1 and P2.

When an opaque portion 3 of a sheet 1 is present on at least one selected from the optical axes L1A and L1B of the light beams respectively emitted from the light-emitting units 20A and 20B, i.e., on at least one selected from the first medium-detecting position P1 and the second medium-detecting position P2 in the transport path 11, at least part of the light beams is blocked by the opaque portion 3. Thus, the light beams passing through the opaque portion 3 are attenuated and the attenuated light beams are received by the light-receiving units 30A and 30B. Thus, the amounts of the light beams received by the light-receiving units 30A and 30B are smaller in the presence of a transparent portion 2 or an opaque portion 3 of a sheet 1 on the optical axes L1 and L2 of the light beams than in the absence of a sheet 1 on the optical axes L1 and L2 of the light beams. The output values, e.g., the output currents, from the light-receiving elements 31 of the light-receiving units 30A and 30B are smaller in the latter case than in the former case. Accordingly, the detecting units can detect the sheet 1 based on the amounts of the light beams received by the light-receiving elements 31 of the light-receiving units 30A and 30B, i.e., based on the output signals from the light-receiving elements 31 of the light-receiving units 30A and 30B.

(Embodiment 9)

In the present embodiment, the features unique to the present embodiment are mainly described and the same contents as in Embodiment 8 are not repeated. The components having the same or similar function in the present embodiment and Embodiment 8 are provided with the same reference signs and the description of these components is not repeated in the present embodiment. The present embodiment is substantially the same as Embodiment 8, except that one of the sheet passage detection devices is rotated around the center of the transport path by 180°.

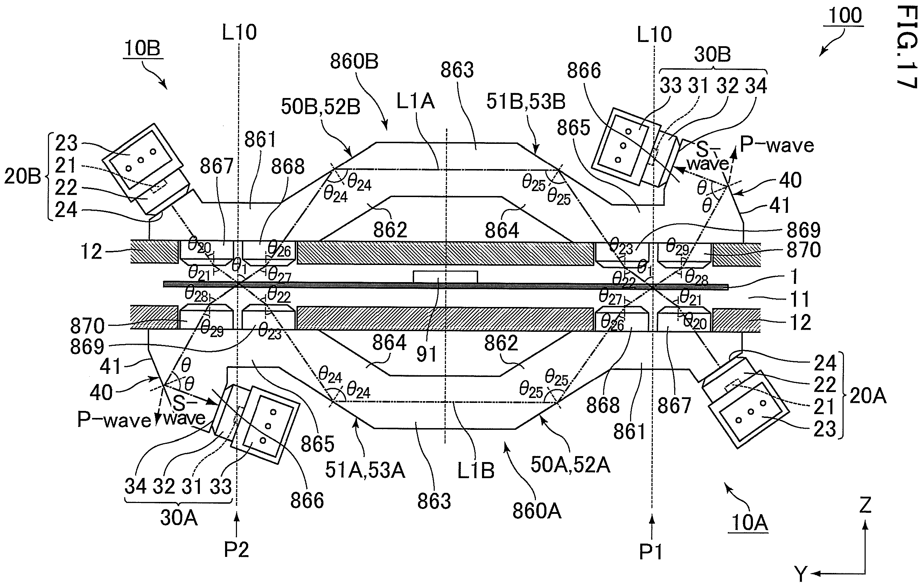

As illustrated in Fig. 17, in the pair of sheet passage detection devices (the pair of medium passage detection devices) 100 of the present embodiment, the light-emitting unit 20A and the light-receiving unit 30B are provided on the same side relative to the center (the same position as the first medium-detecting position P1) of the transport path, and the light-emitting unit 20B and the light-receiving unit 30A are provided on the same side relative to the center of the transport path. Also in the present embodiment, the same functions as in Embodiment 8 can be achieved.

(Embodiment 10)

In the present embodiment, the features unique to the present embodiment are mainly described and the same contents as in Embodiment 8 are not repeated. The components having the same or similar function in the present embodiment and Embodiment 8 are provided with the same reference signs and the description of these components is not repeated in the present embodiment. The present embodiment is substantially the same as Embodiment 8, except that in the light-guiding units 860A and 860B, the light guide 863 is absent and the light guide 862 and the light guide 864 are connected directly.

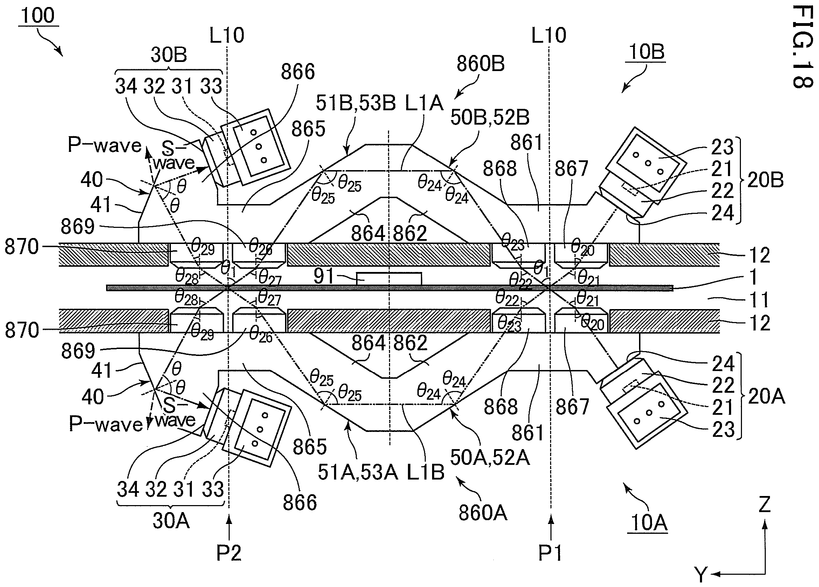

As illustrated in Fig. 18, in the pair of sheet passage detection devices (the pair of medium passage detection devices) 100 of the present embodiment, the light-guiding units 860A and 860B each have a connected structure including, in the stated order, the light guide 861, the light guide 862, the light guide 864, the light guide 865, and the protrusion 866. The light-guiding units 860A and 860B of the present embodiment respectively function similarly to the light-guiding units 860A and 860B of Embodiment 8. Thus, also in the present embodiment, the same functions as in Embodiment 8 can be achieved. In the present embodiment, the distance between the first medium-detecting position P1 and the second medium-detecting position P2 can be narrower than in Embodiment 8.

(Embodiment 11)

In the present embodiment, the features unique to the present embodiment are mainly described and the same contents as in Embodiment 10 are not repeated. The components having the same or similar function in the present embodiment and Embodiment 10 are provided with the same reference signs and the description of these components is not repeated in the present embodiment. The present embodiment is substantially the same as Embodiment 10, except that each sheet passage detection device further includes a housing that accommodates and protects the light-guiding units and holds the light-emitting unit and the light-receiving unit at predetermined positions.

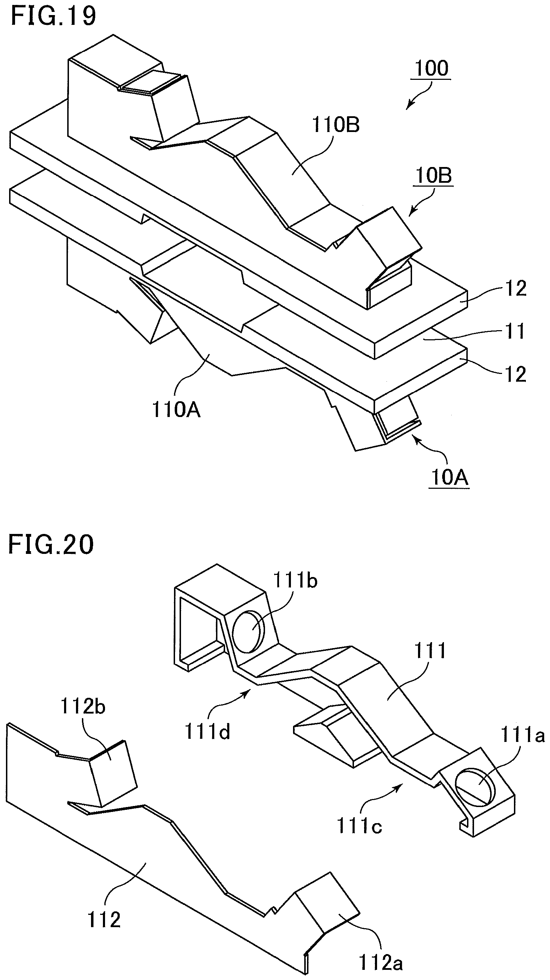

As illustrated in Fig. 19, in the pair of sheet passage detection devices (the pair of medium passage detection devices) 100 of the present embodiment, the sheet passage detection devices 10A and 10B respectively include housings 110A and 110B. The housing 110A is provided on the upper surface of the upper transport guide 12. The housing 110B is provided on the lower surface of the lower transport guide 12.

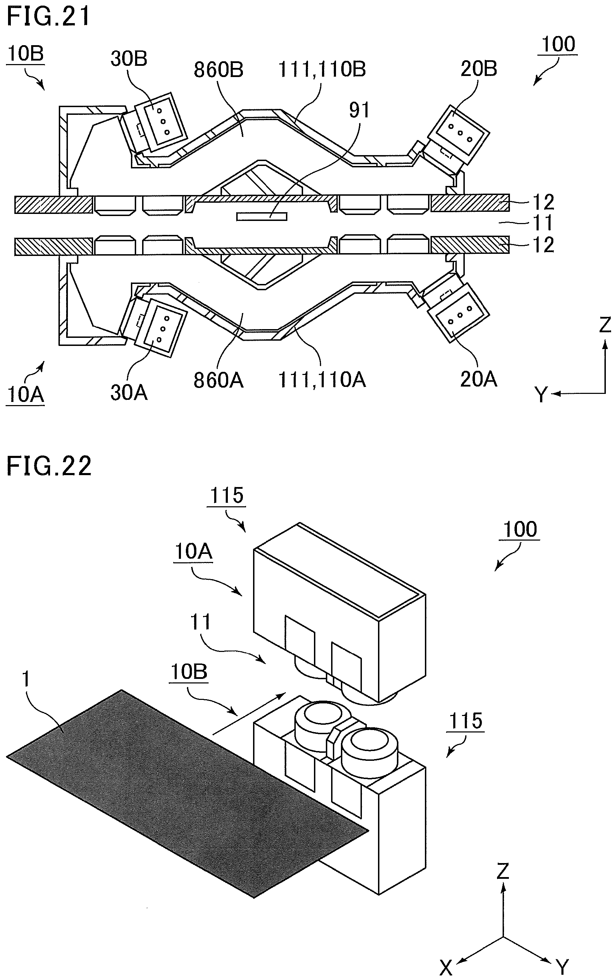

As illustrated in Figs. 20 and 21, the housings 110A and 110B each include a box 111 that has a shape following the shape of the light-guiding units 860A and 860B and a cover 112 that covers the box 111. The box 111 is provided with a through hole 111a into which the protecting member 24 of the light-emitting unit 20A or 20B is to be inserted, a through hole 111b through which the protecting member 34 of the light-receiving unit 30A or 30B is to be inserted, an opening 111c to expose the protrusion 867 and 868 of the light-guiding unit 860A or 860B, and an opening 111d to expose the protrusion 869 and 870 of the light-guiding unit 860A or 860B. The cover 112 includes a holding member 112a that presses the light-emitting unit 20A or 20B to the light-guiding unit 860A or 860B for holding and a holding member 112b that presses the light-receiving unit 30A or 30B to the light-guiding unit 860A or 860B for holding.

As described above, in the present embodiment, the sheet passage detection devices 10A and 10B respectively include the housings 110A and 110B that respectively accommodate and protect the light-guiding units 860A and 860B, and that respectively hold the light-emitting units 20A and 20B and the light-receiving units 30A and 30B at predetermined positions. This enables handling of the sheet passage detection devices 10A and 10B as a single package, leading to easy handling of the sheet passage detection devices 10A and 10B.

(Embodiment 12)

In the present embodiment, the features unique to the present embodiment are mainly described and the same contents as in Embodiment 1 are not repeated. The components having the same or similar function in the present embodiment and Embodiment 1 are provided with the same reference signs and the description of these components is not repeated in the present embodiment. The present embodiment is substantially the same as Embodiment 1, except for the features described below.

As illustrated in Fig. 22, in the present embodiment, the pair of sheet passage detection devices (the pair of medium passage detection devices) 100 including the two sheet passage detection devices 10A and 10B is described. The pair of sheet passage detection devices 100 in the present embodiment is to be mounted on a sheet handling device and utilized to detect passage of a sheet 1 under transport in the transport path of the sheet handling device.

The pair of sheet passage detection devices 100 includes two units 115 having the same structure. This enables standardization of components between the units, reducing the cost of the pair of medium passage detection devices 100. The two units 115 are provided above and below the transport path 11 in which the sheet 1 is to be transported.

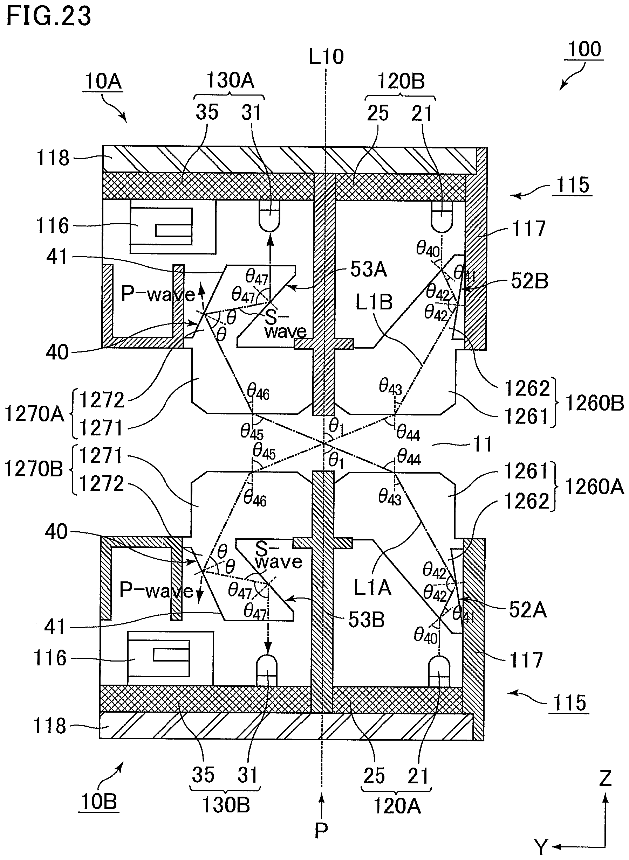

As illustrated in Fig. 23, the units 115 each include the light-emitting element 21, a substrate 25 with the light-emitting element 21 mounted thereon, the light-receiving element 31, a substrate 35 with the light-receiving element 31 mounted thereon, a terminal unit 116 provided on the substrate 35, a light-guiding unit 1260A or 1260B provided between the transport path 11 and the light-emitting unit 20, a light-guiding unit 1270A or 1270B provided between the transport path 11 and the light-receiving element 31, and the housing 117 that accommodates and holds these components. The housing 117 also includes the cover 118 provided on the substrates 25 and 35 on the side opposite to the transport path 11.

The sheet passage detection device 10A includes a light-emitting unit 120A that includes the light-emitting element 21 and the substrate 25 of the unit 115 below the transport path 11, the light-guiding unit 1260A of the unit 115 below the transport path 11, the light-guiding unit 1270A of the unit 115 above the transport path 11, and a light-receiving unit 130A that includes the light-receiving element 31 and the substrate 35 of the unit 115 above the transport path 11. The sheet passage detection device 10B includes a light-emitting unit 120B that includes the light-emitting element 21 and the substrate 25 of the unit 115 above the transport path 11, the light-guiding unit 1260B of the unit 115 above the transport path 11, the light-guiding unit 1270B of the unit 115 below the transport path 11, and a light-receiving unit 130B that includes the light-receiving element 31 and the substrate 35 of the unit 115 below the transport path 11. The sheet passage detection devices 10A and 10B are provided to allow two respective optical axes L1A and L1B of the light beams emitted from the two respective light-emitting units 120A and 120B to cross each other at opposite angles in the transport path 11. This enables determination of a single medium-detecting position P by the two sheet passage detection devices 10A and 10B. In other words, the presence or absence of a sheet 1 can be determined by the two optical axes L1A and L1B for one medium-detecting position. Specifically, when at least one selected from the two sheet passage detection devices 10A and 10B (two detecting units) provides a detection result exhibiting the presence of the sheet 1, the sheet 1 is determined to be present. When both of them exhibit the absence of the sheet 1, the sheet 1 is determined to be absent. This resultantly enables determination of the presence or absence of the sheet 1 based on the result that exhibits a greater attenuated amount or attenuation percentage by monitoring the two optical axes L1A and L1B even when the sheet 1 is transported in a skewed state due to folding, for example. Accordingly, the ability to detect a sheet 1 can be further improved.

Similar to the case of Embodiment 6 described with reference to Fig. 14, the presence of the sheet 1 can be determined based on the result from the sheet passage detection device exhibiting a greater attenuated amount of the transmittance among the two sheet passage detection devices 10A and 10B. Therefore, the pair of sheet passage detection devices 100 in the present embodiment is less likely to be influenced by the state of the sheet 1 under transport and has an excellent detecting ability.

In the present embodiment, the number of positions through which the two optical axes L1A and L1B pass in the transport path 11 is one (medium-detecting position P) and the two optical axes L1A and L1B cross each other at the position.

The pair of medium passage detection devices 100 includes, in the optical path of the light beam emitted from the light-emitting unit 120A, two totally reflecting units 52A and 53A each of which totally reflects the light beam and, in the optical path of the light beam emitted from the light-emitting unit 120B, two totally reflecting units 52B and 53B each of which totally reflects the light beam.

The sheet passage detection devices 10A and 10B are described in more detail below.

The sheet passage detection device 10A includes the light-emitting unit 120A and the light-guiding unit 1260A provided below the transport path 11, and the light-guiding unit 1270A, the S-wave-extracting unit 40, and the light-receiving unit 130A provided above the transport path 11. The sheet passage detection device 10B includes the light-emitting unit 120B and the light-guiding unit 1260B provided above the transport path 11, and the light-guiding unit 1270B, the S-wave-extracting unit 40, and the light-receiving unit 130B provided below the transport path 11. In Fig. 23, a sheet 1 is to be transported into or out of the paper in the sheet handling device. The positions of the light-emitting unit 120A and the light-receiving unit 130A may be changed with each other. Also, the positions of the light-emitting unit 120B and the light-receiving unit 130B may be changed with each other.

The light-guiding unit 1260A has a function of guiding the light beam emitted from the light-emitting unit 120A toward the transport path 11. The light-guiding unit 1270A has a function of guiding the light beam having entered from the transport path 11 toward the S-wave-extracting unit 40 and the light-receiving unit 130A. The light-guiding unit 1260B has a function of guiding the light beam emitted from the light-emitting unit 120B toward the transport path 11. The light-guiding unit 1270B has a function of guiding the light beam having entered from the transport path 11 toward the S-wave-extracting unit 40 and the light-receiving unit 130B.

The light-guiding unit 1260A has a connected structure including a cylindrical light guide 1261 with a first end surface (plane) provided parallel to the transport path 11 and a triangular prismatic light guide 1262 protruding from a second end surface of the light guide 1261 toward the light-emitting element 21.

The light-guiding unit 1260B is a light-guiding unit having the same shape as the light-guiding unit 1260A and, similar to the light-guiding unit 1260A, includes the light guides 1261 and 1262.

The light-guiding units 1260A and 1260B are arranged to be symmetric about the transport path 11. One light guide 1261 faces the other light guide 1261 with the transport path 11 in between.

The light-guiding unit 1270A has a connected structure including a cylindrical light guide 1271 with a first end surface (plane) provided parallel to the transport path 11 and a triangular prismatic light guide 1272 protruding from a second end surface of the light guide 1271 toward the light-receiving element 31.

The light-guiding unit 1270B is a light-guiding unit having the same shape as the light-guiding unit 1270A and, similar to the light-guiding unit 1270A, includes the light guides 1271 and 1272.

The light-guiding units 1270A and 1270B are arranged to be symmetric about the transport path 11. One light guide 1271 faces the other light guide 1271 with the transport path 11 in between.

The light-guiding units 1260A, 1260B, 1270A, and 1270B are each formed from a transparent material. Specific examples of the transparent material include acrylic resin and glass.

The light beam emitted from the light-emitting unit 120A enters the light guide 1262 of the light-guiding unit 1260A, and the light beam having entered the light guide 1262 is totally reflected on the totally reflecting unit 52A provided on one surface of the light guide 1262. The totally reflecting unit 52A is a plane and the orientation thereof is adjusted so as to totally reflect the light beam from the light-emitting unit 120A. The light beam totally reflected on the totally reflecting unit 52A of the light guide 1262 reaches the transport path 11 through the light guide 1261, obliquely crosses the transport path 11 so as to be away from the light-emitting element 21, and enters the light guide 1271 of the light-guiding unit 1270A. The light beam having entered the light-guiding unit 1271 is reflected on the S-wave-extracting unit 40, and totally reflected on the totally reflecting unit 53A provided on one surface of the light guide 1272. The totally reflecting unit 53A is a plane and the orientation thereof is adjusted so as to totally reflect the light beam from the S-wave-extracting unit 40. The light beam totally reflected on the totally reflecting unit 53A of the light guide 1272 vertically enters the surface (plane) facing the light-receiving element 31 of the light guide 1272, and enters the light-receiving element 31 of the light-receiving unit 130A while keeping the traveling direction.

Similar to the light beam emitted from the light-emitting unit 20, the light beam emitted from the light-emitting unit 20B enters the light guide 1262 of the light-guiding unit 1260B, and the light beam having entered the light guide 1262 is totally reflected on the totally reflecting unit 52B provided on one surface of the light guide 1262. The totally reflecting unit 52B is a plane and the orientation thereof is adjusted so as to totally reflect the light beam from the light-emitting unit 120B. The light beam totally reflected on the totally reflecting unit 52B of the light guide 1262 reaches the transport path 11 through the light guide 1261, obliquely crosses the transport path 11 so as to be away from the light-emitting element 21, and enters the light guide 1271 of the light-guiding unit 1270B. The light beam having entered the light-guiding unit 1271 is reflected on the S-wave-extracting unit 40, and totally reflected on the totally reflecting unit 53B provided on one surface of the light guide 1272. The totally reflecting unit 53B is a plane and the orientation thereof is adjusted so as to totally reflect the light beam from the S-wave-extracting unit 40. The light beam totally reflected on the totally reflecting unit 53B of the light guide 1272 vertically enters the surface (plane) facing the light-receiving element 31 of the light guide 1272, and enters the light-receiving element 31 of the light-receiving unit 130B while keeping the traveling direction.

Each S-wave-extracting unit 40 includes the interface 41 between the air and the light-guiding unit 1270A or 1270B including different refractive indexes. The interface 41 corresponds to the surface of the light guide 1272 of the light-guiding unit 1270A or 1270B, and the interface 41 is a plane and is in contact with the air. The interface 41 is provided to allow the incident angle $\theta$ of the light beam emitted from the light-emitting unit 120A or 120B to be substantially equal to Brewster's angle $\alpha$. Thus, when the light beam including the S-wave component and the P-wave component emitted from each of the light-emitting units 120A and 120B is incident on the interface 41, the light beam is reflected and refracted on the interface 41. The light beam reflected on the interface 41 consists substantially only of the S-wave component.

Next, the operation in the present embodiment is described. As illustrated in Fig. 23, the light-emitting unit 120A emits a light beam toward the transport path 11 so that, in the transport path 11, an angle $\theta_1$ of greater than or equal to 60° and less than 90° is formed between the optical axis L1A and the direction L10 perpendicular to the transport path 11. Specifically, the light beam emitted from the light-emitting element 21 of the light-emitting unit 120A enters the light guide 1262 at an incident angle $\theta_{40}$ and a refraction angle $\theta_{41}$ relative to the surface of the light guide 1262 of the light-guiding unit 1260A. The light beam having entered the light guide 1262 is totally reflected toward the light guide 1261 at incident and reflection angles $\theta_{42}$ relative to the totally reflecting unit 52A of the light guide 1262. The angles $\theta_{42}$ are greater than or equal to the critical angle, and may be set to be greater than or equal to 45° and less than 90°, for example. The light beam traveled into the light guide 1261 enters the transport path 11 at an incident angle $\theta_{43}$ and a refraction angle $\theta_{44}$ relative to the interface between the light guide 1261 and the transport path 11 in contact with the light guide 1261. The surface of the light guide 1261 on the transport path 11 side is parallel to the transport path 11. Thus, in the transport path 11, the angle $\theta_{44} = \theta_1$ is formed between the optical axis L1A of the light beam having entered the transport path 11 and the direction L10 perpendicular to the transport path 11.

The surface of the light guide 1271 on the transport path 11 side is parallel to the transport path 11. Thus, the light beam having entered the transport path 11 propagates in the transport path 11, and enters the light guide 1271 at an incident angle $\theta_{45} = \theta_1$ and a refraction angle $\theta_{46}$ relative to the interface between the transport path 11 and the light guide 1271 in contact with the transport path 11. The light beam having entered the light guide 1271 travels toward the light guide 1272. The light beam traveled into the light guide 1272 is reflected on the interface 41 of the S-wave-extracting unit 40 provided to allow the incident angle $\theta$ to be substantially equal to Brewster's angle $\alpha$. Almost the entire P-wave component travels toward the air outside the light-guiding unit 1270A, while the S-wave component is reflected toward the totally reflecting unit 53A of the light guide 1272. The reflected S-wave component is totally reflected toward the light-receiving element 31 of the light-receiving unit 130A at incident and reflection angles $\theta_{47}$ relative to the totally reflecting unit 53A of the light guide 1272. The angles $\theta_{47}$ are greater than or equal to the critical angle, and may be set to be greater than or equal to 45° and less than 90°, for example. The totally reflected S-wave component enters the light-receiving unit 130A.

The light beam emitted from the light-emitting unit 120B also travels an optical path similar to that of the light beam emitted from the light-emitting unit 120A, and finally enters the light-receiving unit 130B as the S-wave component. The optical path of the light beam emitted from the light-emitting unit 120A and the optical path of the light beam emitted from the light-emitting unit 120B are axially symmetric about the straight line that is parallel to the transport path 11 and passes the center of the transport path 11 in the height direction. The optical axis L1A of the light beam emitted from the light-emitting unit 120A and the optical axis L1B of the light beam emitted from the light-emitting unit 120B cross each other at the medium-detecting position P. Thus, in the transport path 11, the optical axes L1A and L1B are positioned on the opposite sides relative to the straight line that is perpendicular to the transport path 11 and passes the medium-detecting position P, except for the position where they cross each other.

Each of the angles $\theta_1$, $\theta_{43}$, $\theta_{44}$, $\theta_{45}$. and $\theta_{46}$ is an acute angle formed by the optical axis L1A or L1B of a light beam with the direction L10 perpendicular to the transport path 11. The refractive indexes of the light-guiding units 1260A, 1260B, 1270A, and 1270B are greater than the refractive index of the air. Thus, the angles $\theta_{43}$ and $\theta_{46}$ formed by the optical axis L1A in the light-guiding units 1260A and 1260B with the direction L10 perpendicular to the transport path 11 are respectively less than the angles $\theta_{44}$ and $\theta_{45}$ formed by the optical axis L1A in the transport path 11 (air) with the direction L10 perpendicular to the transport path 11. Similarly, the angles $\theta_{43}$ and $\theta_{46}$ formed by the optical axis L1B in the light-guiding units 1270A and 1270B with the direction L10 perpendicular to the transport path 11 are respectively less than the angles $\theta_{44}$ and $\theta_{45}$ formed by the optical axis L1B in the transport path 11 (air) with the direction L10 perpendicular to the transport path 11.

When a sheet 1 is absent on the optical axes L1A and L1B of the light beams emitted from the light-emitting units 120A and 120B, i.e., on the medium-detecting position P in the transport path 11, the light beams pass through the transport path 11 and are received respectively by the light-receiving units 130A and 130B without attenuation by the sheet 1. The medium-detecting position P is present between the light-emitting unit 120A and the S-wave-extracting unit 40 of the sheet passage detection device 10A and between the light-emitting unit 120B and the S-wave-extracting unit 40 of the sheet passage detection device 10B.

When a transparent portion 2 of a sheet 1 is present on the medium-detecting position P, the light beams emitted so as to be at an angle $\theta_1$ of greater than or equal to 60° and less than 90° obliquely cross the sheet 1. This increases the reflectivity on the surfaces of the transparent portion 2 when the light beams enter the transparent portion 2 and exits from the transparent portion 2 and thus reduces the transmitted light, thereby reducing the apparent transmittance of the transparent portion 2. The S-wave-extracting units 40 separate the S-wave component from the light beams including the S-wave component and the P-wave component. The light-receiving units 130A and 130B receive the S-wave component separated by the S-wave-extracting units 40. This can further increase the attenuated amount and attenuation percentage of the light beam passing through the transparent portion 2, as in Embodiment 1. As a result, the difference in amount of light received by each of the light-receiving units 130A and 130B can be increased between the transparent portion 2 of the sheet 1 and a portion where the sheet 1 itself is absent, which can improve the ability to detect a transparent portion 2 of a sheet 1.

In addition, as described above, the presence or absence of a transparent portion 2 of a sheet 1 can be determined by the two optical axes L1A and L1B on the medium-detecting position P. This resultantly enables determination of the presence or absence of the sheet 1 based on the result that exhibits a greater attenuated amount or attenuation percentage by monitoring the two optical axes L1A and L1B even when the sheet 1 is transported in a skewed state due to the presence of a crease, for example. Accordingly, the ability to detect a sheet 1 can be further improved.

When an opaque portion 3 of a sheet 1 is present on the optical axes L1A and L1B of the light beams respectively emitted from the light-emitting units 120A and 120B, i.e., on the medium-detecting position P in the transport path 11, at least part of the light beams is blocked by the opaque portion 3. Thus, the light beams passing through the opaque portion 3 are attenuated and the attenuated light beams are received by the light-receiving units 130A and 130B. Thus, the amounts of the light beams received by the light-receiving units 130A and 130B are smaller in the presence of a transparent portion 2 or an opaque portion 3 of a sheet 1 on the optical axes L1 and L2 of the light beams than in the absence of a sheet 1 on the optical axes L1 and L2 of the light beams. The output values, e.g., the output currents, from the light-receiving elements 31 of the light-receiving units 130A and 130B are smaller in the latter case than in the former case. Accordingly, the detecting units can detect the sheet 1 based on the amounts of the light beams received by the light-receiving elements 31 of the light-receiving units 130A and 130B, i.e., based on the output signals from the light-receiving elements 31 of the light-receiving units 130A and 130B.

(Modified Embodiment 1)

Described in the above Embodiments 1 to 7 are cases where a sheet 1 is to be under long edge feed in the transport path 11 of the sheet handling device. Alternatively, the sheet 1 may be under short edge feed in the transport path of the sheet handling device. Described in the above Embodiments 8 to 11 are cases where a sheet 1 is to be under short edge feed in the transport path 11 of the sheet handling device. Alternatively, the sheet 1 may be under long edge feed in the transport path of the sheet handling device.

(Modified Embodiment 2)

Described in the above embodiments are cases where a sheet 1 is to be transported in the positive or negative X-axis direction in the figures. Alternatively, the sheet 1 may be transported in the positive or negative Y-axis direction.

(Modified Embodiment 3)

Described in the above embodiments are cases where a variety of light-guiding units are provided. Alternatively, at least one of the light-guiding units may not be provided.

(Modified Embodiment 4)

Described in the above Embodiments 1 to 3 and 6 to 12 are cases where a light beam is incident on the interface 41 constituting the S-wave-extracting unit 40 from the side of a medium (transparent resin) including a relatively high refractive index. Alternatively, a light beam may be incident on the interface 41 constituting the S-wave-extracting unit 40 from the side of a medium (e.g., the air) including a relatively low refractive index. Also in this case, the incident angle $\theta$ that is substantially equal to Brewster's angle $\alpha$ allows the light beam reflected on the interface 41 to consist substantially only of the S-wave component.

(Modified Embodiment 3)

In the above Embodiments 1 to 9, a housing may be provided that accommodates and protects the light-guiding units and that holds the light-emitting unit(s) and/or the light-receiving unit(s) at a predetermined position(s) as appropriate, as in Embodiment 11.

(Modified Embodiment 5)

Described in the above embodiments are cases where the medium to be detected is a sheet 1. Alternatively, the medium to be detected may be a transparent sheet or a transparent folder for closure, for example.

INDUSTRIAL APPLICABILITY

As described above, the present invention provides a technique useful for detecting the presence or absence of a medium using a medium passage detection device.

REFERENCE SIGNS LIST

1: sheet (medium)
2: transparent portion
2a, 2b: clear window
3: opaque portion
10, 10A, 10B: sheet passage detection device (medium passage detection device)
11: transport path
12: transport guide
20, 20A, 20B, 120A, 120B: light-emitting unit
21: light-emitting element
22, 32: housing
23, 33: terminal unit
24, 34: protecting member
25, 35: substrate
30, 30A, 30B, 130A, 130B: light-receiving unit
31: light-receiving element
40: S-wave-extracting unit
41: interface
42: polarizing film
43: polarizing beam splitter
50A, 51A, 50B, 51B: reflecting unit
52A, 53A, 52B, 53B: totally reflecting unit
60, 70, 360, 370, 380, 470, 570, 660, 670A, 670B, 860A,
860B, 1260A, 1260B, 1270A, 1270B: light-guiding unit
71, 72, 381, 382, 661, 671, 672, 673, 677, 861, 862, 863,
864, 865, 1261, 1262, 1271, 1272: light guide
73, 383, 674: connection
90: roller
91: transport belt
100: pair of sheet passage detection devices (pair of medium passage detection devices)
110A, 110B: housing
111: box
111a, 111b: through hole
111c, 111d: opening
112: cover
112a, 112b: holding member
115: unit
116: terminal unit
117: housing

118: cover
662, 663, 675, 676, 866, 867, 868, 869, 870: protrusion
H: height
L1, L1A, L1B: optical axis
L10: direction perpendicular to transport path
P, P1, P2, P3: medium-detecting position
$\theta$, $\theta_1$, $\theta_2$, $\theta_3$, $\theta_4$, $\theta_5$, $\theta_6$, $\theta_7$, $\theta_8$, $\theta_9$, $\theta_{10}$, $\theta_{11}$, $\theta_{12}$, $\theta_{13}$, $\theta_{14}$, $\theta_{15}$, $\theta_{20}$, $\theta_{21}$, $\theta_{22}$, $\theta_{23}$, $\theta_{24}$, $\theta_{25}$, $\theta_{26}$, $\theta_{27}$, $\theta_{28}$, $\theta_{29}$, $\theta_{40}$, $\theta_{41}$, $\theta_{42}$, $\theta_{43}$, $\theta_{44}$, $\theta_{45}$, $\theta_{46}$, $\theta_{47}$, $\theta_A$, $\theta_B$: angle

**Claims**

1. A medium passage detection device (100) for optically detecting passage of a medium under transport in a transport path (11), the medium passage detection device (100) comprising:

   a light-emitting unit (20) configured to emit a light beam including an S-wave component and a P-wave component to the transport path (11);
   an S-wave-extracting unit (40) configured to separate the S-wave component included in the light beam emitted from the light-emitting unit (20); and
   a light-receiving unit (30) configured to receive the S-wave component that is passed through the medium under transport in the transport path (11) and separated by the S-wave-extracting unit (40),and
   the light beam emitted from the light-emitting unit (20) including an optical axis and, in the transport path (11), an angle being formed between the optical axis and a direction perpendicular to the transport path (11), the angle being greater than or equal to 60° and less than 90°,
   **characterised by** a detecting unit configured to detect the presence or absence of the medium based on an attenuated amount or attenuation percentage of an output signal from the light-receiving unit (30), wherein the detecting unit judges that the medium is present

   - either when an output signal from the light-receiving unit is lower than a percentage of an initial value,
   - or when an attenuated amount or attenuation percentage of the output signal from the light-receiving unit with respect to the initial value, is not lower than a threshold stored in a memory,

   where said initial value is an output value from the light-receiving unit (30) at a stage before a medium is under transport in the transport path (11).

2. The medium passage detection device (100) according to claim 1,
   wherein the S-wave-extracting unit (40) is configured to separate the S-wave component before the light beam emitted from the light-emitting unit (20) passes through the medium.

3. The medium passage detection device (100) according to claim 1,
   wherein the S-wave-extracting unit (40) is configured to separate the S-wave component after the light beam emitted from the light-emitting unit (20) passes through the medium.

4. The medium passage detection device (100) according to any one of claims 1 to 3,
   wherein the light-emitting unit (20) is configured to emit infrared light.

5. The medium passage detection device (100) according to any one of claims 1 to 4,

   wherein the S-wave-extracting unit (40) comprises an interface between substances including different refractive indexes, and
   the interface is provided to allow the light beam emitted from the light-emitting unit (20) to be at an incident angle that is substantially equal to Brewster's angle.

6. The medium passage detection device (100) according to claim 5,

   wherein the light-emitting unit (20) and the light-receiving unit (30) are provided on a first side of the transport path (11), and
   the S-wave-extracting unit (40) is provided on a second side of the transport path (11) and reflects the S-wave component included in the light beam emitted from the light-emitting unit (20) toward the first side of the transport path (11).

7. The medium passage detection device (100) according to any one of claims 1 to 4,
   wherein the S-wave-extracting unit (40) comprises a polarizing film.

8. The medium passage detection device (100) according to any one of claims 1 to 4,
   wherein the S-wave-extracting unit (40) comprises a polarizing beam splitter.

9. A pair of medium passage detection devices (100) comprising two medium passage detection devices (100), each of the two medium passage detection devices being the medium passage detection device (100) according to any one of claims 1 to 8,
   the two medium passage detection devices (100) being provided to allow the two respective optical axes of the light beams emitted from the two respective light-emitting units (20) to cross each other at opposite angles in the transport path (11) .

10. The pair of medium passage detection devices (100) according to claim 9,

    wherein in each of the two medium passage detection devices (100), the light-emitting unit (20) and the light-receiving unit (30) are provided on a same side of the transport path (11), and
    each of the two medium passage detection devices (100) comprises a reflecting unit that reflects the light beam emitted from the light-emitting unit (20) of the other medium passage detection device (100).

11. The pair of medium passage detection devices (100) according to claim 9 or 10,

    wherein the two optical axes pass the transport path (11) at three sites, and
    the two optical axes cross each other at one of the three sites.

12. The pair of medium passage detection devices (100) according to claim 9 or 10,

    wherein the two optical axes pass the transport path (11) at two sites, and
    the two optical axes cross each other at the two sites.

13. The pair of medium passage detection devices (100) according to claim 9,
    wherein each of the two medium passage detection devices (100) comprises a reflecting unit that reflects the light beam emitted from the light-emitting unit (20) of the other medium passage detection device (100).

14. The pair of medium passage detection devices (100) according to any one of claims 9 to 13,
    wherein each of the two medium passage detection devices (100) includes, in an optical path of the light beam emitted from the respective light-emitting unit (20), two totally reflecting units each totally reflecting the light beam.

15. A pair of medium passage detection devices (100) comprising two medium passage detection devices (100), each of the two medium passage detection devices (100) being the medium passage detection device (100) according to claim 1, 2, 3, 4, 5, 7, or 8,

    the two medium passage detection devices (100) being provided to allow the two respective optical axes of the light beams emitted from the two respective light-emitting units (20) to cross each other at opposite angles in the transport path (11),
    the two optical axes passing the transport path (11) at one site,
    the two optical axes crossing each other at the one site.

16. The pair of medium passage detection devices (100) according to claim 15,
    wherein each of the two medium passage detection devices includes, in an optical path of the light beam emitted from the respective light-emitting unit (20), two totally reflecting units each totally reflecting the light beam.

**Patentansprüche**

1. Mediumdurchgang-Detektionsvorrichtung (100) zur optischen Detektion des Durchgangs bzw. der Passage von einem Medium unter Transport in einem Transportweg (11), wobei die Mediumdurchgang-Detektionsvorrichtung (100) aufweist:

   eine lichtemittierende Einheit (20), die konfiguriert ist, einen Lichtstrahl, der eine S-Wellenkomponente und eine P-Wellenkomponente enthält, zu dem Transportweg (11) zu emittieren;
   eine S-Wellenextraktionseinheit (40), die konfiguriert ist, die S-Wellenkomponente zu separieren, die in dem Lichtstrahl enthalten ist, der von der lichtemittierenden Einheit (20) emittiert wird; und
   eine lichtempfangende Einheit (30), die konfiguriert ist, die S-Wellenkomponente zu empfangen, die durch das Medium unter Transport in dem Transportweg (11) durchgegangen ist und durch die S-Wellenextraktionseinheit (40) separiert wird, und
   den Lichtstrahl, der von der lichtemittierenden Einheit (20) emittiert wird, der eine optische Achse enthält, und in dem Transportweg (11) wird ein Winkel zwischen der optischen Achse und einer Richtung senkrecht zu dem Transportweg (11) gebildet, wobei der Winkel größer als oder gleich 60° und kleiner als 90° ist,
   **gekennzeichnet durch** eine Detektionseinheit, die konfiguriert ist, das Vorhandensein oder Nichtvorhandensein des Mediums zu detektieren, basierend auf einem abgeschwächten bzw. verminderten Ausmaß oder Abschwächungs- bzw. Verminderungsprozentsatz von einem Ausgangssignal von der lichtempfangenden Einheit (30), wobei die Detektionseinheit beurteilt, dass das Medium vorhanden ist

   - entweder, wenn ein Ausgangssignal von der lichtempfangenden Einheit geringer als ein Prozentsatz von einem Initialwert ist,
   - oder, wenn ein abgeschwächtes bzw. vermindertes Ausmaß oder Abschwächungs- bzw. Verminderungsprozentsatz von dem Ausgangssignal von der lichtempfangenden Einheit mit Bezug auf den Initialwert nicht geringer als ein Schwellen- bzw. Grenzwert ist, der in einem Speicher gespeichert ist,

   wobei der Initialwert ein Ausgabewert von der lichtempfangenden Einheit (30) an einer Stufe bzw. einem Stadium ist, bevor ein Medium unter Transport in dem Transportweg (11) ist.

2. Mediumdurchgang-Detektionsvorrichtung (100) gemäß Anspruch 1,
   wobei die S-Wellenextraktionseinheit (40) konfiguriert ist, die S-Wellenkomponente zu separieren, bevor der Lichtstrahl, der von der lichtemittierenden Einheit (20) emittiert wird, durch das Medium durchgeht.

3. Mediumdurchgang-Detektionsvorrichtung (100) gemäß Anspruch 1,
   wobei die S-Wellenextraktionseinheit (40) konfiguriert ist, die S-Wellenkomponente zu separieren, nachdem der Lichtstrahl, der von der lichtemittierenden Einheit (20) emittiert wird, durch das Medium durchgeht.

4. Mediumdurchgang-Detektionsvorrichtung (100) gemäß irgendeinem der Ansprüche 1 bis 3,
   wobei die lichtemittierende Einheit (20) konfiguriert ist, Infrarotlicht zu emittieren.

5. Mediumdurchgang-Detektionsvorrichtung (100) gemäß irgendeinem der Ansprüche 1 bis 4,
   wobei die S-Wellenextraktionseinheit (40) eine Schnittstelle zwischen Substanzen aufweist, die unterschiedliche Brechungsindizes enthalten, und
   wobei die Schnittstelle zur Verfügung gestellt wird, um es dem Lichtstrahl, der von der lichtemittierenden Einheit (20) emittiert wird, zu ermöglichen, mit einem Einfallswinkel zu sein, der im Wesentlichen gleich zu Brewster-Winkel ist.

6. Mediumdurchgang-Detektionsvorrichtung (100) gemäß Anspruch 5,

   wobei die lichtemittierende Einheit (20) und die lichtempfangende Einheit (30) an einer ersten Seite des Transportweges (11) zur Verfügung gestellt werden, und
   wobei die S-Wellenextraktionseinheit (40) an einer zweiten Seite des Transportweges (11) zur Verfügung gestellt wird und die S-Wellenkomponente reflektiert, die in dem Lichtstrahl enthalten ist, der von der lichtemittierenden Einheit (20) in Richtung der ersten Seite des Transportweges (11) emittiert wird.

7. Mediumdurchgang-Detektionsvorrichtung (100) gemäß irgendeinem der Ansprüche 1 bis 4,
   wobei die S-Wellenextraktionseinheit (40) einen Polarisationsfilm aufweist.

8. Mediumdurchgang-Detektionsvorrichtung (100) gemäß irgendeinem der Ansprüche 1 bis 4, wobei die S-Wellenextraktionseinheit (40) einen polarisierenden Strahlteiler aufweist.

9. Paar von Mediumdurchgang-Detektionsvorrichtungen (100), aufweisend zwei Mediumdurchgang-Detektionsvorrichtungen (100), wobei jede der zwei Mediumdurchgang-Detektionsvorrichtungen die Mediumdurchgang-Detektionsvorrichtung (100) gemäß irgendeinem der Ansprüche 1 bis 8 ist, wobei die zwei Mediumdurchgang-Detektionsvorrichtungen (100) zur Verfügung gestellt werden, um den zwei jeweiligen optischen Achsen der Lichtstrahlen, die von den zwei jeweiligen lichtemittierenden Einheiten (20) emittiert werden, zu ermöglichen, sich mit entgegengesetzten Winkeln in dem Transportweg (11) zu überschneiden.

10. Paar von Mediumdurchgang-Detektionsvorrichtungen (100) gemäß Anspruch 9,

wobei in jeder der zwei Mediumdurchgang-Detektionsvorrichtungen (100) die lichtemittierende Einheit (20) und die lichtempfangende Einheit (30) auf einer gleichen Seite des Transportweges (11) zur Verfügung gestellt werden, und wobei jede der zwei Mediumdurchgang-Detektionsvorrichtungen (100) eine Reflexionseinheit aufweist, die den Lichtstrahl reflektiert, der von der lichtemittierenden Einheit (20) der anderen Mediumdurchgang-Detektionsvorrichtung (100) emittiert wird.

11. Paar von Mediumdurchgang-Detektionsvorrichtungen (100) gemäß Anspruch 9 oder 10,

wobei die zwei optischen Achsen den Transportweg (11) an drei Stellen passieren bzw. durchlaufen, und wobei sich die zwei optischen Achsen an einer der drei Stellen überschneiden.

12. Paar von Mediumdurchgang-Detektionsvorrichtungen (100) gemäß Anspruch 9 oder 10,

wobei die zwei optischen Achsen den Transportweg (11) an zwei Stellen passieren bzw. durchlaufen, und wobei sich die zwei optischen Achsen an den zwei Stellen überschneiden.

13. Paar von Mediumdurchgang-Detektionsvorrichtungen (100) gemäß Anspruch 9, wobei jede der zwei Mediumdurchgang-Detektionsvorrichtungen (100) eine Reflexionseinheit aufweist, die den Lichtstrahl reflektiert, der von der lichtemittierenden Einheit (20) von der anderen Mediumdurchgang-Detektionsvorrichtung (100) emittiert wird.

14. Paar von Mediumdurchgang-Detektionsvorrichtungen (100) gemäß irgendeinem der Ansprüche 9 bis 13, wobei jede der zwei Mediumdurchgang-Detektionsvorrichtungen (100) in einem optischen Pfad von dem Lichtstrahl, der von der jeweiligen lichtemittierenden Einheit (20) emittiert wird, zwei total reflektierende Einheiten enthält, wobei jede den Lichtstrahl total reflektiert.

15. Paar von Mediumdurchgang-Detektionsvorrichtungen (100), die zwei Mediumdurchgang-Detektionsvorrichtungen (100) aufweisen, wobei jede der zwei Mediumdurchgang-Detektionsvorrichtungen (100) die Mediumdurchgang-Detektionsvorrichtung (100) gemäß Anspruch 1, 2, 3, 4, 5, 7 oder 8 ist,

wobei die zwei Mediumdurchgang-Detektionsvorrichtungen (100) zur Verfügung gestellt werden, um den zwei jeweiligen optischen Achsen des Lichtstrahls, der von den zwei jeweiligen lichtemittierenden Einheiten (20) emittiert wird, zu ermöglichen, sich mit entgegengesetzten Winkeln in dem Transportweg (11) zu überschneiden, wobei die zwei optischen Achsen den Transportweg (11) an einer Stelle passieren bzw. durchlaufen, wobei sich die zwei optischen Achsen einander an der einen Stelle überschneiden.

16. Paar von Mediumdurchgang-Detektionsvorrichtungen (100) gemäß Anspruch 15, wobei jede der zwei Mediumdurchgang-Detektionsvorrichtungen in einem optischen Pfad von dem Lichtstrahl, der von der jeweiligen lichtemittierenden Einheit (20) emittiert wird, zwei total reflektierende Einheiten enthält, wobei jede den Lichtstrahl total reflektiert.

**Revendications**

1. Dispositif de détection de passage de support (100) pour détecter optiquement le passage d'un support en transport

EP 3 660 544 B1

dans un trajet de transport (11), le dispositif de détection de passage de support (100) comprenant :

une unité émettrice de lumière (20) configurée pour émettre un faisceau de lumière, incluant une composante d'onde S et une composante d'onde P, vers le trajet de transport (11) ;
une unité extractrice d'onde S (40) configurée pour séparer la composante d'onde S incluse dans le faisceau de lumière émis à partir de l'unité émettrice de lumière (20) ; et
une unité réceptrice de lumière (30) configurée pour recevoir la composante d'onde S, qui est passée à travers le support en transport dans le trajet de transport (11) et séparée par l'unité extractrice d'onde S (40), et
le faisceau de lumière émis à partir de l'unité émettrice de lumière (20) incluant un axe optique et, dans le trajet de transport (11), un angle étant formé entre l'axe optique et une direction perpendiculaire au trajet de transport (11), l'angle étant supérieur ou égal à 60 ° et inférieur à 90 °,
**caractérisé par** une unité détectrice configurée pour détecter la présence ou l'absence du support, sur la base d'une quantité atténuée ou d'un pourcentage d'atténuation d'un signal de sortie provenant de l'unité réceptrice de lumière (30), dans lequel l'unité détectrice évalue que le support est présent

- lorsqu'un signal de sortie provenant de l'unité réceptrice de lumière est inférieur à un pourcentage d'une valeur initiale,
- ou lorsqu'une quantité atténuée ou un pourcentage d'atténuation du signal de sortie provenant de l'unité réceptrice de lumière, par rapport à la valeur initiale, n'est pas inférieur à un seuil stocké dans une mémoire,

où ladite valeur initiale est une valeur de sortie provenant de l'unité réceptrice de lumière (30) à un stade avant qu'un support soit en transport dans le trajet de transport (11).

2. Dispositif de détection de passage de support (100) selon la revendication 1,
dans lequel l'unité extractrice d'onde S (40) est configurée pour séparer la composante d'onde S avant que le faisceau de lumière émis à partir de l'unité émettrice de lumière (20) passe à travers le support.

3. Dispositif de détection de passage de support (100) selon la revendication 1,
dans lequel l'unité extractrice d'onde S (40) est configurée pour séparer la composante d'onde S après que le faisceau de lumière émis à partir de l'unité émettrice de lumière (20) passe à travers le support.

4. Dispositif de détection de passage de support (100) selon l'une quelconque des revendications 1 à 3,
dans lequel l'unité émettrice de lumière (20) est configurée pour émettre de la lumière infrarouge.

5. Dispositif de détection de passage de support (100) selon l'une quelconque des revendications 1 à 4,

dans lequel l'unité extractrice d'onde S (40) comprend une interface entre des substances incluant différents indices de réfraction, et
l'interface est prévue pour permettre au faisceau de lumière émis à partir de l'unité émettrice de lumière (20) d'être à un angle incident qui est sensiblement égal à l'angle de Brewster.

6. Dispositif de détection de passage de support (100) selon la revendication 5,

dans lequel l'unité émettrice de lumière (20) et l'unité réceptrice de lumière (30) sont prévues sur un premier côté du trajet de transport (11), et
l'unité extractrice d'onde S (40) est prévue sur un second côté du trajet de transport (11) et réfléchit la composante d'onde S, incluse dans le faisceau de lumière émis à partir de l'unité émettrice de lumière (20), vers le premier côté du trajet de transport (11).

7. Dispositif de détection de passage de support (100) selon l'une quelconque des revendications 1 à 4,
dans lequel l'unité extractrice d'onde S (40) comprend un film polarisant.

8. Dispositif de détection de passage de support (100) selon l'une quelconque des revendications 1 à 4,
dans lequel l'unité extractrice d'onde S (40) comprend un séparateur de faisceau polarisant.

9. Paire de dispositifs de détection de passage de support (100) comprenant deux dispositifs de détection de passage de support (100), chacun des deux dispositifs de détection de passage de support étant le dispositif de détection de passage de support (100) selon l'une quelconque des revendications 1 à 8,

34

les deux dispositifs de détection de passage de support (100) étant prévus pour permettre aux deux axes optiques respectifs des faisceaux de lumière émis à partir des deux unités émettrices de lumière respectives (20) de se croiser à des angles opposés dans le trajet de transport (11).

10. Paire de dispositifs de détection de passage de support (100) selon la revendication 9,

   dans laquelle, dans chacun des deux dispositifs de détection de passage de support (100), l'unité émettrice de lumière (20) et l'unité réceptrice de lumière (30) sont prévues sur un même côté du trajet de transport (11), et chacun des deux dispositifs de détection de passage de support (100) comprend une unité réfléchissante qui réfléchit le faisceau de lumière émis à partir de l'unité émettrice de lumière (20) de l'autre dispositif de détection de passage de support (100).

11. Paire de dispositifs de détection de passage de support (100) selon la revendication 9 ou 10,

   dans laquelle les deux axes optiques franchissent le trajet de transport (11) à trois endroits, et
   les deux axes optiques se croisent à un des trois endroits.

12. Paire de dispositifs de détection de passage de support (100) selon la revendication 9 ou 10,

   dans laquelle les deux axes optiques franchissent le trajet de transport (11) à deux endroits, et
   les deux axes optiques se croisent aux deux endroits.

13. Paire de dispositifs de détection de passage de support (100) selon la revendication 9,
   dans laquelle chacun des deux dispositifs de détection de passage de support (100) comprend une unité réfléchissante qui réfléchit le faisceau de lumière émis à partir de l'unité émettrice de lumière (20) de l'autre dispositif de détection de passage de support (100).

14. Paire de dispositifs de détection de passage de support (100) selon l'une quelconque des revendications 9 à 13,
   dans laquelle chacun des deux dispositifs de détection de passage de support (100) inclut, dans un trajet optique du faisceau de lumière émis à partir de l'unité émettrice de lumière respective (20), deux unités totalement réfléchissantes chacune réfléchissant totalement le faisceau de lumière.

15. Paire de dispositifs de détection de passage de support (100) comprenant deux dispositifs de détection de passage de support (100), chacun des deux dispositifs de détection de passage de support (100) étant le dispositif de détection de passage de support (100) selon la revendication 1, 2, 3, 4, 5, 7, ou 8,

   les deux dispositifs de détection de passage de support (100) étant prévus pour permettre aux deux axes optiques respectifs du faisceaux de lumière émis à partir des deux unités émettrices de lumière respectives (20) de se croiser à des angles opposés dans le trajet de transport (11),
   les deux axes optiques franchissant le trajet de transport (11) à un endroit,
   les deux axes optiques se croisant à l'un endroit.

16. Paire de dispositifs de détection de passage de support (100) selon la revendication 15,
   dans laquelle chacun des deux dispositifs de détection de passage de support inclut, dans un trajet optique du faisceau de lumière émis à partir de l'unité émettrice de lumière respective (20), deux unités totalement réfléchissantes chacune réfléchissant totalement le faisceau de lumière.

# FIG.1

(a)

(b)

(c)

FIG.2

FIG.3

# FIG.4

Incident light

P-wave component

Reflected light

Refractive index $n_1$

S-wave component

$\alpha$  $\alpha$

Reflecting surface

Refractive index $n_2$

$\beta$

Refracted light

# FIG.5

L10

L1

P:2.1% S:14.8%

20

P:2.1% S:10.4%

$\theta_2$

P:50% S:50%

12

$\theta_1$  $\theta_3$  P:47.9% S:35.2%

11

$\theta_4$

12

P:45.8% S:24.8%  $\theta_5$

40

$\theta$

41

$\theta$

P

P-wave

P:45.8% S:21.2%

30

S-wave

P:0% S:3.6%

Z

Y

## FIG.6

## FIG.7

FIG.8

FIG.9

FIG.10

FIG.11

# FIG.12

FIG.13

FIG.14

FIG.15

FIG.16

FIG.17

FIG.18

FIG.19

FIG.20

FIG.21

FIG.22

# FIG.23

**REFERENCES CITED IN THE DESCRIPTION**

**Patent documents cited in the description**

- JP H0798247 A
- US 2015151938 A1
- EP 0628787 A2
- JP 61061087 A
- JP 2010203834 A
- JP 2006347743 A